(19) Europäisches Patentamt
European Patent Office
Office européen des brevets

(11) **EP 1 830 529 B1**

(12) **EUROPEAN PATENT SPECIFICATION**

(45) Date of publication and mention
of the grant of the patent:
**15.10.2008 Bulletin 2008/42**

(51) Int Cl.:
**H04L 25/02** (2006.01)

(21) Application number: **06004277.7**

(22) Date of filing: **02.03.2006**

(54) **Channel estimator, method and computer program for obtaining a processed channel estimate**

Kanalschätzer, Verfahren und Computerprogramm zum Erhalten eines verarbeiteten Kanalschätzwertes

Estimateur de canal, procédé et programme informatique pour obtenir une estimée de canal traitée

(84) Designated Contracting States:
**DE GB**

(43) Date of publication of application:
**05.09.2007 Bulletin 2007/36**

(73) Proprietor: **NTT DoCoMo Inc.**
**Chiyoda-Ku**
**Tokyo 100-6150 (JP)**

(72) Inventors:
  • **Bonnet, Jérome**
    **2611 NH Delft (NL)**
  • **Auer, Gunther**
    **80339 Munich (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**US-A1- 2001 004 390      US-A1- 2002 167 923**

• **YINGJIU XU ET AL: "Pilot symbol assisted QAM with iterative filtering and turbo decoding over Rayleigh flat-fading channels" MILCOM 1999. IEEE MILITARY COMMUNICATIONS CONFERENCE PROCEEDINGS. ATLANTIC CITY, NJ, OCT. 31 - NOV. 3, 1999, IEEE MILITARY COMMUNICATIONS CONFERENCE, NEW YORK, NY : IEEE, US, vol. VOL 1 OF 2 CONF. 18, 31 October 1999 (1999-10-31), pages 86-91, XP002179089 ISBN: 0-7803-5539-3**
• **HUANING NIU ET AL INSTITUTE OF ELECTRICAL AND ELECTRONICS ENGINEERS: "Iterative channel estimation and decoding of pilot symbol assisted LDPC coded QAM over flat fading channels" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, vol. VOL. 1 OF 2. CONF. 37, 9 November 2003 (2003-11-09), pages 2265-2269, XP010702691 ISBN: 0-7803-8104-1**

## EP 1 830 529 B1

**Description**

The present invention is generally related to a channel estimator, a method and a computer program for obtaining a processed channel estimate for a symbol position in time or frequency using existing channel estimates for a plurality of several positions in time or frequency. In particular, the present invention is related to a threshold-based iterative channel estimation for BICM-OFDM conditioned on a decision feedback quality indicator.

The present invention addresses the issue of channel estimation for OFDM in fast, frequency-selective fading channels. Combined with channel coding, OFDM allows to achieve high data rates and reliable transmission over dispersive channels in a wireless communication system. Iterative channel estimation techniques based on filtering are known to potentially enhance greatly the estimation performance by using data symbol estimates derived from the channel decoder. This application of the turbo principle proves to be particularly relevant when the scarceness of pilot symbols in OFDM symbols and/or OFDM frames causes a large degradation of the pilot-aided channel estimation (PACE) performance.

In the following, the problem and prior art solutions will be described.

Several iterative channel estimation (ICE) techniques for OFDM have been proposed so far. In an optimal approach, channel estimation and detection are performed jointly by applying the A Posteriori Probability calculation algorithm (APP estimator) [1]. However, the optimality of this joint solution comes at the cost of a significant enhancement of the receiver complexity and will not be considered in the following.

In a second approach, channel estimation and detection are carried out separately at the receiver. For iterative channel estimation with filtering, data symbol estimates derived from the channel decoder output are multiplexed with pilot symbols and fed to the linear MMSE estimator [2]. At low SNR, the poor reliability of the channel decoder feedback induces data symbol estimation errors and the performance of the ICE method is strongly degraded. The negative impact of decision feedback errors on the channel estimation performance grows with the modulation size.

Optimized ICE algorithms aim to reduce this detrimental effect by taking into account data symbol estimation errors in the computation of the Wiener filter coefficients [3][4][5]. These techniques require however a slightly higher decoding complexity and cannot resolve completely the high loss in channel estimation performance of ICE at low SNR.

The confidence level of the soft decision feedback has been taken into account in [6] and [7] to determine whether a data symbol estimate should be used for iterative filtering or not. The proposed techniques do not exhibit yet noticeable performance enhancements relative to ICE with hard decision feedback.

The existing threshold-based methods have thus to be completely modified to provide a significant performance gain over ICE with soft or hard decision feedback.

It is therefore the objective of the present invention to create a concept for obtaining a processed channel estimate which is reliable at low signal-to-noise ratios and at the same time brings along improvements over existing channel estimation concepts at higher signal-to-noise ratios.

This objective is achieved by a channel estimator for obtaining a processed channel estimate according to claim 1, a method for obtaining a processed channel estimate according to claim 27, and a computer program according to claim 28.

The present invention creates a channel estimator for obtaining a processed channel estimate for a symbol position in time or frequency using existing channel estimates for a plurality of symbol positions in time or frequency. The channel estimator comprises a determinator for determining quality measures describing a reliability of data estimates, corresponding to the existing channel estimates (i.e. at the symbol positions of the existing channel estimates), of data transmitted in at least two different symbol positions. The channel estimator further comprises a weighter for weighting the quality measures in dependence on filter coefficients of a symbol-position-filter to derive a weighted quality measure, wherein the coefficients of the symbol-position-filter are adapted so that filtered channel estimates are less affected by channel distortions than channel estimates before filtering with the symbol-position-filter. A comparator is adapted to compare the weighted quality measure with a threshold value. Moreover, a processor is adapted to obtain the processed channel estimate by filtering, using the filter coefficients, at least two channel estimates from the existing channel estimates, if the weighted quality measure indicates a reliability exceeding a reliability threshold.

It the key idea of the present invention to decide on the basis of the weighted quality measure, whether the processed channel estimate is determined by filtering, using the filter coefficients, at least two channel estimates from the existing channel estimates. As the same filter coefficients are used for the weighting of the quality measures for a certain symbol position, and for the actual filtering of the existing channel estimate at the certain symbol position, the impact, which an unreliable existing channel estimate has on the processed channel estimate can be predicted.

In other words, according to the present invention the quality measures describe indirectly (by describing the reliability of data symbol estimates) how reliable existing channel estimates are. When determining the weighted quality measure, the individual quality measures are weighted according to the filter coefficients. Thus, quality measures corresponding (with respect to symbol position) to existing channel estimates, which, according to the filter coefficients, have a stronger impact on the result of the filtering are given a higher weight in the calculation of the weighted quality

2

measure when compared to individual quality measures corresponding to existing channel estimates which, according to the filter coefficients, only have a weaker impact on the result of the filtering. Thus, the weighted quality measure is a good prediction of a reliability of the result of the filtering, i.e. of a processed channel estimate determined by the filtering.

Consequently, according to the present invention, the weighted quality measure is a meaningful quality measure, which, in contrast to prior art quality measures, judges the reliability of channel estimates with respect to their actual impact on the resulting processed channel estimate, not by themselves individually.

Thus, even if, for example, a potentially unreliable existing channel estimate is present, the filtering can be executed, provided the potentially unreliable existing channel estimate is weighted with a comparatively small filter coefficient. On the other hand, the calculation of a processed channel estimate by means of a filtering is omitted, if one or more potentially unreliable existing channel estimates would, according to the filter coefficients, have a comparatively strong impact on the result of the filtering.

In other words, weighting the quality measures describing the reliability of the data estimates produces the weighted quality measure as an indicator of whether the filtering provides a reliable processed channel estimate or not.

The inventive method is in contrast to conventional methods which would simply exclude existing channel estimates from being used if they are not sufficiently reliable. However, the conventional approach is not particularly efficient, as even an existing channel estimate considered to be not sufficiently reliable by itself may help to improve the result of the filtering, provided that the weight of the not respective existing channel estimate in the filtering is not too big.

Further advantageous embodiments of the present invention are defined by the dependent claims.

In a preferred embodiment, the processor is adapted to provide a previously computed channel estimate as the processed channel estimate, if the weighted quality measure indicates a reliability smaller than the reliability threshold. In other words, the weighted quality measure indicates whether a result of the filtering of the existing channel estimate can be expected to provide a processed channel estimate which is improved over a previously computed channel estimate. For this purpose, it is assumed that an improvement can only be achieved if the weighted quality measure exceeds a certain threshold. If the weighted quality measure indicates a reliability smaller than the reliability threshold, the previously computed channel estimate is maintained and return as the processed channel estimate.

In another preferred embodiment, the determinator for determining quality measures describing the reliability of data estimates is adapted to calculate symbol probabilities for possible data symbols at symbol positions used for deriving the existing channel estimates. The symbol probabilities describe probabilities that a sender has transmitted a given data symbol out of a set of possible data symbols at a certain symbol position, based on the received data symbol at the certain symbol position. The determinator is further adapted to derive the reliability of the data estimates from the symbol probabilities.

In other words, the determinator is adapted to receive (channel-corrected) complex-valued modulation symbols at the symbol positions of interest. From the complex-valued modulation symbols, the determinator determines, e.g. making use of knowledge about a mapping table and information about a channel statistic (e.g. an effective channel noise), the probabilities that the received modulation symbol is a result of a transmission of different possible (transmitted) data symbols. Thus, the determinator determines for different possible data symbols in a symbol position the corresponding probabilities, and uses the probabilities for deriving the reliability measure of the data estimates.

In a preferred embodiment, the determinator derives the probability of the most-probable data symbol and the probability of the second-most-probable data symbol. Then, the determinator derives the quality measure by forming a quotient of the symbol probability of the second-most-probable data symbol and the symbol probability of the most-probable data symbol.

The above described quality measure is reliable even for large modulation alphabets. In such a case, the symbol probability of only the most probable data symbol alone is of limited information, as there is still a large uncertainty if two data symbols have similar symbol probabilities. In contrast, the inventive quotient of the data symbol probabilities of the most-probable data symbol and the second-most-probable data symbol produces a small value (indicating a high reliability) only if the symbol probability of the most-probable data symbol is significantly larger than the symbol probability of the second-most-probable data symbol. Thus, the inventive quality measure brings along an improved reliability when compared to conventional reliability measures, which is, for example, particularly relevant for large modulation alphabets, where it can easily happen that two different data symbols have similar symbol probabilities.

In another preferred embodiment, the determinator is adapted to obtain effective signal-to-noise ratios for the at least two different symbol positions as the quality measures. It was found that the effective signal-to noise ratios also produce a particularly reliable weighted quality measure when combined with the filter coefficients.

In another preferred embodiment, the inventive channel estimator comprises a threshold value determinator adapted to determine the threshold value on the basis of an estimate of a mean-squared-error of a channel estimate obtained by a pilot-only channel estimation. Thus, the threshold value is adapted to the pilot-only-based channel estimate by which initial (or existing) channel estimates have been calculated. The threshold value derived from the estimate of a mean-squared-error of a channel estimate obtained by a pilot-only-based channel estimation sets a limit so that it can be decided whether the channel estimate which could be obtained from filtering the existing channel estimates would be more reliable than the results of the pilot-only-based channel estimation.

In another preferred embodiment, the threshold value determinator is adapted to introduce into the threshold value a term describing an interpolation error of the filter on the basis of the filter coefficients. It was found that the interpolation error of the filter can approximately be expressed as a function of the filter coefficients. It was further found that a particularly precise and meaningful comparison of the reliability of the pilot-only-based channel estimate and a estimate obtained by filtering the existing channel estimates can be obtained if the weighted reliability measure is compared with a threshold value indicative of both the mean-squared error of the pilot-only-based channel estimate and an interpolation error of the filter.

The present invention further creates a method for obtaining a processed channel estimate for a symbol position in time or frequency which implements the functionality of the described channel estimator. The inventive method can be supplemented by all the steps described with reference to the inventive channel estimator. Besides, the present invention comprises a computer program for executing the inventive method.

Preferred embodiments of the present invention will subsequently be described with reference to the enclosed Figs. in which:

Fig. 1 shows a graphical representation of the principle of an iterative channel estimation based on soft symbol estimates and pilot symbols;

Fig. 2 shows a block-schematic diagram of a channel estimator for performing a channel estimation based on pilot tones and symbol estimates;

Fig. 3 shows a block-schematic diagram of an inventive channel estimator for obtaining a processed channel estimate;

Fig. 4a shows a first part of a schematic representation of an inventive channel estimation method;

Fig. 4b shows a second part of a schematic representation of an inventive channel estimation method;

Fig. 5 shows a graphical representation of a quality indicator (EQI) in terms of a log-likelihood ratio LLR corresponding to a given BPSK symbol;

Fig. 6 shows a graphical representation of a quality indicator EQI in terms of log-likelihood ratios $LLR_1$ and $LLR_2$ associated to a QPSK symbol;

Fig. 7 shows a graphical representation of a quality indicator EQI in terms of a second-largest symbol probability $P_2$ for various values of a largest symbol probability $P_1$ ;

Fig. 8 shows a graphical representation of a normalized amplitude $\left| c_f'(i) \right| / \left( \sum_{j=1}^{M_f} \left| c_f'(j) \right| \right)$ of Wiener filter coefficients with a filtering window of size $M_F = 9$;

Fig. 9 shows a graphical representation of a channel MSE performance versus $E_b/N_0$ for PACE, standard ICE, threshold-based ICE, ideal threshold-based ICE (symbol probabilities and effective SNR method) and ICE with perfect channel decoder feedback (dashed line) after 3 turbo iterations.

Fig. 10 shows a graphical representation of a channel MSE performance versus a number of iterations for standard ICE (dashed curves) and threshold-based ICE (symbol probabilities method, solid curves) at various values of $E_b/N_0$ ; and

Fig. 11 shows a graphical representation of a bit error rate (BER) performance versus $E_b/N_0$ for PACE, standard ICE, threshold-based ICE (symbol probabilities and effective SNR methods), and ideal threshold-based ICE, wherein the BER performance achieved with perfect channel knowledge is plotted for reference after five turbo iterations.

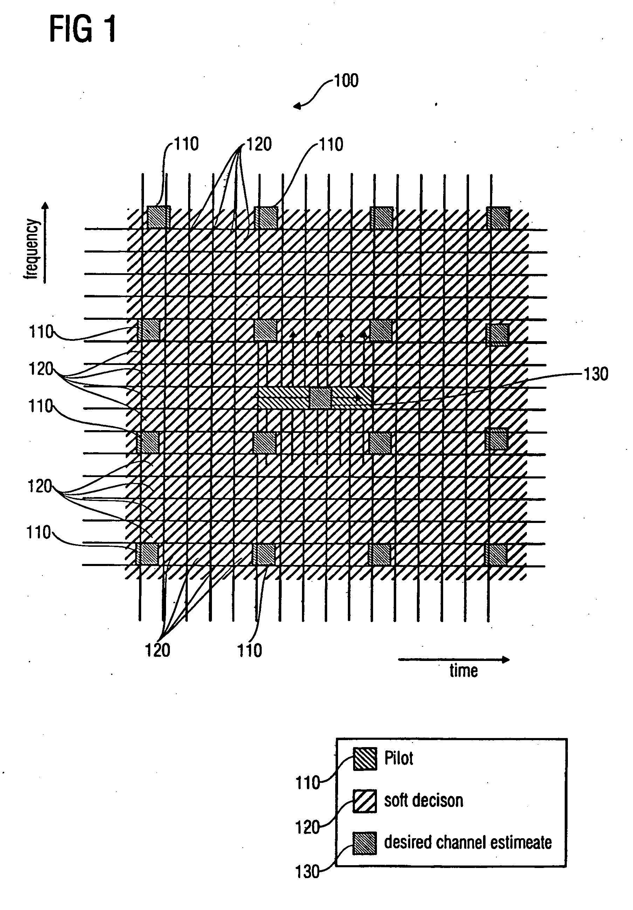

Fig. 1 shows a graphical representation of an iterative channel estimation based on soft symbol estimates and pilot symbols. The graphical representation of Fig. 1 is designated in its entirety with 100. It is assumed here that in a communication system a plurality of data symbols are transmitted at corresponding data symbol positions. As can be seen from the graphical representation 100, data symbol positions may, for example, be characterized by different center frequencies, different frequency ranges or different temporal positions. Different symbol positions may also describe different sub-carriers in an orthogonal frequency division multiplex (OFDM) system. For the following considerations, symbol positions may, for example, be characterized by a single frequency index or sub-carrier index n at a given point in time, by a single time index k (if subsequent symbol positions of a single frequency range or sub-carrier are considered), or by a pair of indices (k,n) describing both a frequency position and a temporal position of a symbol position.

In other words, in a typical data communication system, a data symbol is transmitted in each symbol position (or at least in some symbol positions) of a two-dimensional grid of symbol positions, the symbol positions being characterized by a time index k and a frequency index n. It is further assumed that in at least some symbol positions unknown payload data are to be transported, which are represented by a typically complex-valued transmitted symbol.

Thus, in a receiver receiving a respective signal, typically complex-valued modulation symbol values can be obtained for each symbol position, a modulation symbol value describing a received data symbol at the respective symbol position. However, in order to derive from the modulation symbol value the data symbol transmitted at the symbol position, it is necessary to know the impact of a communication channel between the transmitter and the receiver on the modulation symbol value. For this purpose, it is necessary to estimate a transfer function of the channel at the symbol position.

To allow for an estimation of the channel, a number of data symbols, whose data content is known to the receiver, are included in the transmitted signal. These known data symbols are designated in the following as pilot symbols.

Using the pilot symbols, which are transmitted at pilot symbol positions (also designated as pilot positions), an estimate of the channel at the pilot positions can be obtained. It should be noted here that the pilot positions are designated with 110 in the graphical representation 100 of symbol positions over time and frequency. Furthermore, it should be noted that non-pilot symbol positions are typically located between pilot symbol positions 110, wherein some of the non-pilot positions are designated with 120 in the graphical representation 100. Typically, any positions which are not pilot symbol positions are non-pilot-symbol positions. In the non-pilot symbol positions, typically a payload (i.e. unknown information to be transported from the transmitter to the receiver) is transmitted, wherein some of the non-pilot symbol positions may be unused.

In order to receive correctly the information transported in the non-pilot symbol positions, it is necessary to have at least an approximate estimate of the channel transfer function at the non-pilot symbol positions. Several approaches are known in order to estimate the channel at the non-pilot symbol positions.

It should be noted that for a pilot symbol position, a relatively accurate estimate of the channel can be achieved, as for the pilot symbol positions the transmitted data symbol is known to the receiver. The channel can therefore be estimated by forming a quotient between a received modulation symbol and a modulation symbol expected by the receiver.

In contrast, a direct estimation of the channel in the non-pilot symbol position is not possible, as the data transmitted in the non-pilot symbol positions is not known to the receiver. For this reason, in a simple approach, the channel estimates obtained at the pilot symbol positions are interpolated using an interpolation filter, which may be, for example, a Wiener-filter whose coefficients are adapted based on knowledge about characteristics (e.g. an auto-correlation-matrix) of the channel. The interpolation filter thus yields channel estimates at non-pilot symbol positions.

It should be noted that, for example, for the pilot symbol distribution shown in the graphical representation 100, interpolation is required both in a frequency direction and in a time direction in order to obtain channel estimates for all non-pilot symbol positions. The interpolation may, for example, be first performed in a frequency direction, wherein channel estimates at pilot symbol positions serve as an input information for the interpolation. Subsequently, interpolation may be executed in a time direction also, so that a channel estimate can be obtained for any arbitrary desired symbol position, e.g. for the symbol position designated with 130 in the graphical representation 100.

However, such a procedure of a channel estimation brings along relatively large errors as the number of pilot symbol positions is typically much smaller than the number of non-pilot symbol positions in order to reduce the transmission overhead, as payload data can only be transmitted at non-pilot symbol positions.

The described disadvantages can partly be overcome using an iterative channel estimation, which is based on a pilot-only-based channel estimation (designated as pilot-aided-channel-estimation PACE). It should be noted that iterative channel estimation is well known to those skilled in the art. However, as a conventional iterative channel estimation is the basis of the present invention, a brief description will be given here.

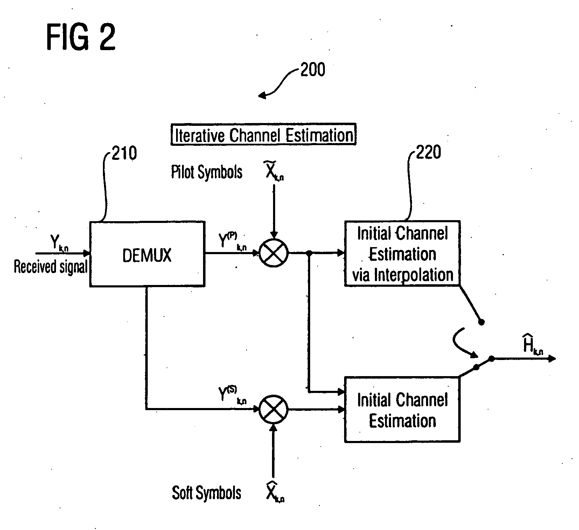

It is assumed that modulation symbols of typically complex-valued modulation amplitudes are provided to an iterative channel estimation device. For the purpose of explanation, Fig. 2 shows an exemplary device for an iterative channel estimation based on pilot tones and symbol estimates, wherein the device of Fig. 2 is designated in its entirety with 200. The (modulation) symbols at the symbol positions are designated by $Y_{k,n}$. It should be noted that the symbols $Y_{k,n}$ comprise symbols both at pilot symbol positions and at non-pilot symbol positions, wherein the symbols (or the received signal) at the pilot positions are designated with $Y_{k,n}^{(P)}$, and wherein the symbols (or the received signal) at the non-pilot symbol positions are designated with $Y_{k,n}^{(S)}$. The symbols $Y_{k,n}^{(P)}$ are separated from the symbols $Y_{k,n}^{(S)}$ in a demultiplexer 210. For an initial channel estimation, only the transmitted data symbols at the pilot symbol positions are known, which are designated as $\tilde{X}_{k,n}$ while the transmitted data symbols at the non-pilot positions ($\hat{X}_{k,n}$) are not known at the stage of the initial channel estimation. Channel estimates at the pilot symbol position are obtained by dividing the received modulation symbols $\tilde{X}_{k,n}$, by the known pilot symbols $\tilde{X}_{k,n}$. From the initial channel estimates obtained as described for the pilot symbol positions, an initial pilot-only-based channel estimate can be obtained for all symbol positions (or at least for some non-pilot symbol positions) by an interpolation performed by the interpolator 220.

Thus, after the pilot-only-based channel estimation (PACE), channel estimates are known at all symbol positions (or at least at some non-pilot symbol positions) due to the interpolation. However, the channel estimates at the non-pilot symbol positions are not very precise yet due to uncertainties of the interpolation procedure.

However, knowing pilot-only channel estimates at non-pilot symbol positions, an iteration can be performed. For this purpose, estimates of transmitted data symbols at the non-pilot symbol positions are calculated. Initial pilot-only channel estimates at the respective non-pilot symbol positions are used in this procedure. For a certain non-pilot symbol position, the corresponding pilot-only based channel estimate is applied to the respective sample value $Y_{k,n}^{(S)}$ to obtain a channel corrected symbol, from which an estimate $\hat{X}_{k,n}$ for a transmitted data symbols can be obtained. The data symbol estimate $\hat{X}_{k,n}$ may, for example, be obtained using a hard decision or a soft decision, as is well known in the art, and as it will also be described in the following. From the estimate $\hat{X}_{k,n}$ of the data symbol transmitted in a non-pilot symbol position, a channel estimate at the respective non-pilot symbol position can be obtained by dividing the sample value (or received modulation symbol) $Y_{k,n}^{(S)}$ by the data symbol estimate $\hat{X}_{k,n}$. The respective data-based channel estimate is typically better than the pilot-only-based channel estimate for the same non-pilot symbol position, provided the data estimate $\hat{X}_{k,n}$ is correct.

In the iterative channel estimation 230, the channel estimates at the pilot symbol positions calculated previously can be combined with the above-described channel estimates at the non-pilot symbol positions based on the quotient of the sample values $\overline{Y_{k,n}^{(S)}}$ and the data symbol estimates $\hat{X}_{k,n}$. In the iterative channel estimation 230, for example, a common filtering of the channel estimates at the pilot symbol positions and the data-based channel estimates at the non-pilot symbol positions may be performed.

In many cases, the channel estimate obtained by the iterative channel estimation 230 is more accurate than a channel estimate obtained by the initial channel estimation 220.

Moreover, a further iteration can be performed. New data estimates $\hat{X}_{k,n}$,next_step can be obtained using the data-based channel estimates at the non-pilot symbol positions, and a further improved channel estimate at the non-pilot symbol positions can be obtained.

The described iteration may be repeated several times.

In the following, some details for prior art iterative filtering and decoding will be described in order to improve the understanding of the present invention.

After an initial channel estimation obtained via PACE, the soft feedback information provided by a channel decoder can be exploited in order to extend the number of sub-carriers utilized for channel estimation (CE). In this case, *extrinsic* soft information on coded bits under the form of log-likelihood ratios (LLRs) is fed back to the channel estimation block.

In the following, it will be described, how data symbol estimates are obtained from the log-likelihood ratios (LLRs) by a soft mapping. However, a hard mapping could also be used to obtain the data symbol estimates.

It is assumed here that a number of $\log_2(Q)$ bits are mapped on a data symbol from a constellation alphabet of cardinality Q, as will be described in the following.

After re-interleaving, the LLRs are converted into symbol estimates via soft mapping. A generic soft mapper would form $\hat{X}$ from a constellation alphabet $\{A_m\}_{m=\{1,....Q\}}$ of cardinality Q as follows:

$$\hat{X} = \sum_{m=1}^{Q} P(X = A_m) \cdot A_m \qquad (1)$$

In the latter, the symbol probabilities $P(X = A_m)$ are derived from the bit probabilities. Let $(b_1(m),..., b_{log2(Q)}(m))$ denote the string of bits the symbol $A_m$ is mapped onto. The symbol probability obtained from the sample of log-likelihood ratios $(L_1,...,L_{log2(Q)})$ reads then

$$P(X = A_m) = \prod_{j=1}^{\log_2(Q)} f_{b_j(m)}(L_j), \qquad (2)$$

where the function $f_i(x)$ is being defined in (22).

For example, a soft mapper for QPSK ($Q=4$) would calculate soft symbols given the LLRs $L_1$ and $L_2$ of a pair of coded bits as follows:

$$\hat{X} = P(X = A_1) \cdot A_1 + P(X = A_2) \cdot A_2 + P(X = A_3) \cdot A_3 + P(X = A_4) \cdot A_4 \qquad (3)$$

where

$$P(X = A_m) = f_{b_1(m)}(L_1) \cdot f_{b_2(m)}(L_2) \qquad (4)$$

To summarize the above, a data symbol estimate $\hat{X}_{k,n}$ is calculated for a non-pilot symbol position making use of a preliminary (or existing) channel estimate for the respective non-pilot symbol position and the respective symbol $Y_{k,n}$ at the non-pilot symbol position. For this purpose, additional information, for example about a channel noise or about an estimate of an expected error of the preliminary (or existing) channel estimate may be considered.

In the above example, the data symbol estimate $\hat{X}_{k,n}$ is calculated as a soft decision, but a hard decision may also be performed.

Subsequently, a (filtered) channel estimate is derived from least square (LS) channel estimates $\tilde{H}_{k,n}$ (also designated as existing channel estimates) using, for example, two cascaded Wiener-filters.

In other words, the soft symbols are used for a Wiener Filter design (or filtering) in addition to the perfectly known pilot symbols. At each turbo iteration, a channel estimate obtained after filtering in frequency direction becomes

$$\hat{H}_{k,n}^{(f)} = \mathbf{c'}_f^{\mathbf{T}} \cdot \tilde{\mathbf{h}}_n \qquad (5)$$

In the latter, $\tilde{h}_n = [\tilde{H}_{k,n-N_1},..., \tilde{H}_{k,n+N_2}]^T$ is a vector stacking the $(N_2 + N_1 + 1)$ Least-Square (LS) estimates which verify

$$\tilde{H}_{k,n} = \frac{Y_{k,n}}{\hat{X}_{k,n}}, \qquad (6)$$

where $\hat{X}_{k,n}$ can be either a pilot symbol or a soft symbol estimate derived from the LLRs, depending on the symbol indices in frequency and time directions. The filter-window size of the finite-impulse-response filter is $N_1+N_2+1$.

In a second step, the filtering in time direction follows:

$$\hat{H}_{k,n}^{(t)} = \mathbf{c'}_t^{\mathbf{T}} \cdot \tilde{\mathbf{h}}_k^{(f)}, \qquad (7)$$

where the vector $\hat{\mathbf{h}}_n^{(f)} = \left[\hat{H}_{k-N_1',n}^{(f)}, \ldots, \hat{H}_{k+N_2',n}^{(f)}\right]^T$ comprises $(N_2' + N_1' + 1)$ channel estimates produced in (5) after filtering in frequency direction. The size of the filter-window in time direction is $N_1'+N_2'+1$. The final channel estimates $\hat{H}_{k,n} = \hat{H}_{k,n}^{(t)}$ are then delivered to the de-mapper in the receiver chain for coherent detection.

With this iterative procedure, an interpolation is obviously not required anymore as the ICE technique is based on pilot and soft symbols from the whole time/frequency grid. Therefore, the Wiener filter coefficients contained in $\mathbf{c'}_f$ and $\mathbf{c'}_t$ from (5) and (7) are deduced from the Wiener-Hopf equations without interpolation. In frequency direction, we would have the standard expression:

$$\mathbf{c}_f' = \left(\mathbf{R}_{HH} + \left(\sigma_N^2 / E_B\right) \cdot \mathbf{I}\right)^{-1} \cdot \mathbf{r}_{HH,f} \qquad (8)$$

where $\mathbf{R}_{HH}$ accounts for the auto-correlation matrix of the CTF while $\mathbf{r}_{HH,f}$ denotes the cross-correlation vector expressing the correlation between the desired CTF and the CTFs from the entire filtering window. In time direction, the Wiener-Hopf equations lead to an expression of $\mathbf{c'}_t$ similar to that obtained for the frequency direction in (8). Indeed, The expressions for $\mathbf{c'}_t$ and $\mathbf{c'}_f$ differ only in the cross-/ and auto-correlation matrices.

Note that this iterative channel estimation is still performed in two successive steps, in frequency and in time directions, and the filter orders (or sizes of the filter windows) are respectively $M_f = N_2 + N_1 +1$ and

$$M_t = N_2' + N_1' + 1 .$$

In [2], a similar estimator made of two cascaded one-dimensional Wiener filters, filtering successively in time and in frequency directions, has been proposed. This separated channel estimation/detection approach is however still sensitive to channel error propagations due to a possibly erroneous first channel estimation via interpolation. The pilot symbol spacings in both time and frequency directions are therefore still key parameters for the performance of ICE techniques: a perfect reconstruction of the initial channel transfer function is only possible if the limits of the sampling theorem in the time and frequency domains are respected. The fulfillment of this requirement ensures the reliability of the first channel estimate before any turbo iteration. Fig. 1 and Fig. 2 depict the specific iterative part of the overall ICE procedure.

Note that the new threshold-based ICE technique presented in the following could also rely on other iterative channel estimation techniques. For instance, iterative channel estimation with filtering over one single signal dimension (time or frequency), as shown in [7], is also applicable to the novel ICE scheme.

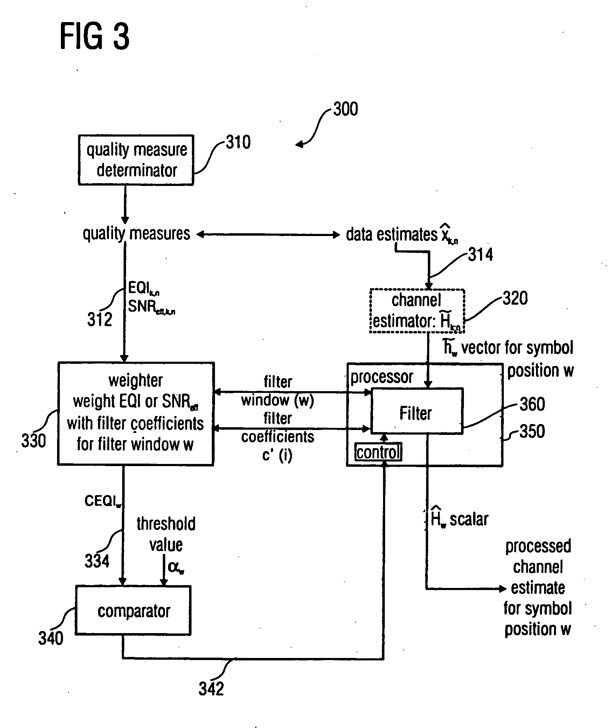

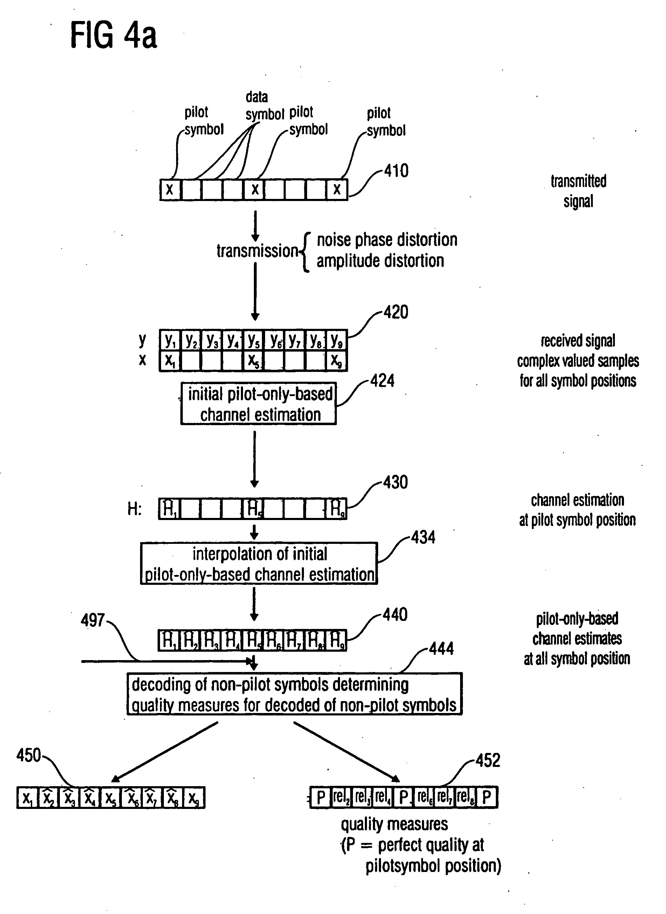

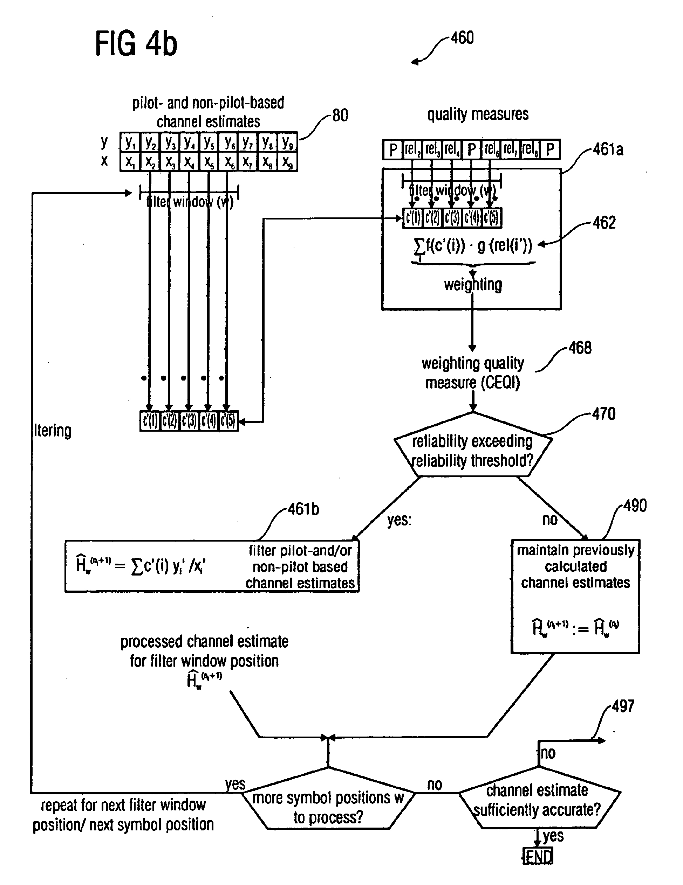

In the following, an inventive device (channel estimator) for obtaining a processed channel estimate for a symbol position in time or frequency will be described with reference to Figs. 3, 4a and 4b. Fig. 3a shows a block schematic diagram of the inventive device, and Figs. 4a and 4b show a graphical representation of the calculations performed by the device 300 of Fig. 3.

It is assumed that the device 300 receives or generates data estimates $\hat{X}_{k,n}$ for at least two symbol positions, which are typically non-pilot symbol positions. The device 300 further comprises a quality measure determinator 310 for determining quality measures 312 describing a reliability of the data estimates $\hat{X}_{k,n}$ of data transmitted in the at least two different symbol positions. The quality measures 312 will in the following, for example, be designated with EQI for $SNR_{eff}$. Besides, it is expressed by indices k,n that both the quality measures 312 and the corresponding data estimates 314 ($\hat{X}_{k,n}$) are calculated for at least two symbols positions. Further, a channel estimator 320, which does not need to be part of the inventive device 300 (and which may therefore be considered to be optional), is adapted to determine existing channel estimates $\tilde{H}_{k,n}$, which may, for example, be defined as

$$\tilde{H}_{k,n} = \frac{Y_{k,n}}{\hat{X}_{k,n}} .$$

Alternatively, the device 300 may receive the existing channel estimates $\tilde{H}_{k,n}$ from an external calculation unit.

In the following, it is assumed that an index w designates a symbol position for which a processed channel estimate is to be calculated. For the symbol position w, a filter window is determined, wherein the filter window defines, which adjacent symbol positions contribute to the processed channel estimate for the symbol position w.

A weighter 330 receives the quality measures 312 and weights, for the filter window defined by the symbol position w, the quality measures 312 in dependence on corresponding filter coefficients c'. In other words, the weighter 330 forms a sum of products, the products being calculated from a quality measure 312 and a weighting value derived from a corresponding filter coefficient c'.

Thus, the weighter 330 produces a channel estimate quality indicator CEQI characteristic for the symbol position w, wherein the channel estimate quality indicator is also designated with 334. A comparator 340 compares the channel estimate quality indicator 334 (CEQI w) with a threshold value $\alpha_w$ and provides an information 342 indicating whether the reliability described by the channel estimate quality indicator 334 exceeds the reliability threshold defined by the threshold value $\alpha_w$.

A processor 350 is adapted to provide a processed channel estimate $\hat{H}_w$ for a symbol position w, if the information 342 indicates that the weighted quality measure 334 describes a reliability exceeding the reliability threshold value $\alpha_w$. In this case, the processor 350 receives a vector $\tilde{h}_w$ of existing channel estimates $\tilde{H}_{k,n}$ for the symbol position w, wherein the elements of the vector $\tilde{h}_w$ are the channel estimates $\tilde{H}_{k,n}$ within the filter window for the symbol position w. The filter 360 then combines the elements of the channel estimate vector $\tilde{h}_w$ with respective filter coefficients c', for example by performing a scalar-product operation between the elements of the vector $\tilde{h}_w$ and the filter coefficients c'. From the filter operation of the filter 360, the processed channel estimate $\hat{H}_{k,n}$ is obtained for the symbol position w.

It should be noted here that at a specific symbol position v, the same filter coefficient $c'(i_v)$ is applied within the weighter 330 and within the filter 360 for a given symbol position w. Thus, when calculating the processed channel estimate for the symbol position w, a channel estimate $\tilde{H}_v$, (for the symbol position v) is multiplied with the same filter coefficient $c'(i_v)$ that is applied to the corresponding quality measure 312 at the symbol position v ($EQI_v$ at symbol position v, or $SNR_{eff,v}$ at symbol position v) in the weighter 330.

To summarize the above, same filter coefficients are applied to corresponding quantities at symbol position v in the weighter 330 and in the filter 360. Thus, the weighted quality measure 334 produced by weighter 330 considers the quantity of the filter coefficients applied to a existing channel estimates within the filter window by the filter 360.

Therefore, the weighted channel estimate quality indicator 334 is a good measure of reliability of the output of the filter 360 (a processed channel estimate $\tilde{H}_w$ for the symbol position w.

It should be noted here that the index v may describe any symbol positions contained in the filter window for the symbol position w.

In the following, the function of the device 300 will be described with reference to Figs. 4a and 4b. However, some of the functionality described in Fig. 4a is not performed by the device 300 as will be described below. However, these parts are included in the description to allow for a complete understanding.

It should be noted that symbol positions are depicted in Figs. 4a and 4b as a number of linearly arranged boxes, wherein the actual arrangement could be, for example, in time or in frequency. However, combined arrangements in frequency and time may be possible.

It is further assumed that a transmitted signal 410 comprises at adjacent symbol positions (e.g. of an OFDM modulation scheme) a number of symbols, wherein the symbols can be divided into pilot symbols, which are a-priori known to a receiver, and data symbols carrying the data payload, which are not a-priori known to the receiver. In the transmitted signal 410, the pilot symbols are represented by a box filled with an "X", while the data symbols are represented by an empty box. It should also to be noted that typically a number of unknown data symbols are located between the pilot symbols.

When the transmitted signal 410 is transmitted over a channel, a phase distortion and an amplitude distortion is introduced due to the characteristics of the channel. Furthermore, noise is introduced in the transmitter, in the channel, and in the receiver. Fig. 4a further shows a received signal 420, represented by (typically complex-valued) samples Y1, Y2, Y3, Y4, Y5, Y6, Y7, Y8, Y9, at for example, 9 different symbol positions. The samples may for example be samples of received modulation symbols.

It should be noted that for the given example the transmitted data symbols are known at the first symbol position (index 1), at the 5th symbol position (index 5) and at the 9th symbol position (index 9), as in the given example it is assumed that pilot symbols are transmitted at the 1st symbol position, the 5th symbol position, and the 9th symbol position. The known pilot symbols are designated in the example with $X_1$, $X_5$, and $X_9$.

In a first step 424, an initial pilot-only-based channel estimation is performed to determine initial channel estimates only at the pilot positions. The initial channel estimates are shown in a graphical representation 430 for the respective symbol positions, and are designated with $\hat{H}1$, $\hat{H}5$, and $\hat{H}9$. The initial channel estimates at the pilot symbol positions may for example be calculated by dividing the sample values $Y_i$ by the corresponding known pilot symbols $X_i$ (i = 1, 5, 9).

In a further step 434, an interpolation of the initial pilot-only-based channel estimates $\hat{H}_1$, $\hat{H}_5$, $\hat{H}_9$ is performed to obtain pilot-only-based channel estimates $\hat{H}_2$ $\hat{H}_3$ $\hat{H}_4$, $\hat{H}_6$, $\hat{H}_7$, $\hat{H}_8$, at non-pilot symbol positions. The graphical representation 440 shows channel estimates both at the pilot symbol positions and the non-pilot symbol positions.

Thus, pilot-only-based channel estimates are known for all symbol positions, or at least for a plurality of non-pilot symbol positions.

Using the initial pilot only based channel estimate 440 (which may for the following be considered an existing channel estimate), the samples $\hat{Y}_2$, $\hat{Y}_3$, $\hat{Y}_4$, $\hat{Y}_6$, $\hat{Y}_7$, $\hat{Y}_8$, at the non-pilot symbol positions, can be decoded in a step 444 to obtain data symbol estimates $\hat{X}_2$, $\hat{X}_3$, $\hat{X}_4$, $\hat{X}_6$, $\hat{X}_7$, $\hat{X}_8$, which are a first estimate of the data symbols transmitted at the non-pilot symbol positions. The determination of the first data symbol estimates $\hat{X}_2$, $\hat{X}_3$, $\hat{X}_4$, $\hat{X}_6$, $\hat{X}_7$, $\hat{X}_8$ goes along with a determination of quality measures for the decoded non-pilot data symbols, wherein the quality measures are shown in a graphical representation 452 and are designated with $rel_2$, $rel_3$, $rel_4$, $rel_6$, $rel_7$, $rel_8$.

The quality measures $rel_2$, $rel_3$, $rel_4$, $rel_6$, $rel_7$, $rel_8$ describe the reliability of the data symbol estimates and may be derived in the decoding process 444, for example by applying knowledge of the channel statistics (e.g. noise and an expected channel estimation error). It is further known that the reliability of data symbol estimates at the pilot positions is perfect due to the fact that the pilot symbols are predefined. The perfect reliability at the pilot positions is indicated by a "P" in the graphical representation 452.

To summarize the above, the first data symbol estimates are shown in the graphical representation 450, and the corresponding quality measures (for corresponding or identical symbol positions) are shown in the graphical representation 452.

In a subsequent step 461a, the weighted quality measure is determined on the basis of the quality measures. It should be noted here that the process of determining a weighted quality measure is coupled with the process 461b of determining a processed channel estimate, as will be described.

It is assumed in the following, that a processed channel estimate should be determined for a symbol position designated with w (w representing either k or n). It is further assumed here that for determining the processed channel estimate at the symbol position w, a number of existing data symbol estimates (or existing channel estimates) at symbol positions within a filter window are used. In other words, the filter window is typically dependent on the index w of the symbol position, for which a processed channel estimate is determined, and the filter window defines information on which symbol positions will be considered for the calculation of the channel estimate for the symbol position w. In order to understand the above-mentioned relationship, it should be noted that typically for calculating the processed channel estimate for the symbol position w, information from the symbol positions $w-N_1$ to $w+M_2$ is applied to the filter.

Thus, the filter window for this case specifies the symbol positions from $w-M_1$ to $w+N_2$, the filter window extending either in a time direction or a frequency direction.

In the following, a vector of quality measures (designated with $\tilde{\mathbf{h}}_w$ is formed summarizing the quality measures at symbol positions defined by the filter window (e.g. if the symbol positions $w-N_1$ to $w+N_2$). The selected quality measures of the vector $\tilde{\mathbf{h}}_w$ are then weighted in dependence on the corresponding filter coefficients, wherein an i-th quality measure within the filter window is combined with an i-th filter coefficient. For example, the first filter coefficient c' (1) is used to weight the quality measure at symbol position $(w-N_1)$, and the $(M_1+N_2+1)$-th filter coefficient $c'(M_1+N_2+1)$ is used to weight the quality measure at symbol position $(w+N_2)$.

The weighting is performed by forming a sum of products, the product being calculated by multiplying a function of the i-th filter coefficient (f(c'(i))) and a function of the i-th quality measure within the filter window (the function being designated as "$g(rel_i)$". The sum is performed over the index i of the filter coefficients, which at the same time defines the position of the used quality measure within the filter window. It should be noted here, that in the graphical representation of Fig 4b, the index i' designates the actual symbol position, which is related to the position i within the filter window by a simple shift operation.

The weighting is depicted in the graphical representation 460, and the weighting sum is designated with 462. The functions f and g of the weighting functions 462 may be linear and/or non-linear functions, for example, a formation of an absolute value, a formation of the square of an absolute value, a linear scaling function, or an identity function.

Thus, a weighted quality measure is obtained, which is valid for the calculation of a processed channel estimate for the symbol position w (or for the position of the filter window associated with the symbol position w). The weighted quality measure is designated with 468, and corresponds to the channel estimate quality indicator CEQI described for the device 300.

In a step 470, it is tested whether the weighted quality measure 468 indicates a reliability exceeding a reliability threshold. If this is the case, pilot- and/or non-pilot channel estimates are filtered using the filter coefficients c'(i), which have already been applied for determining the weighted quality measure 468. In this case, pilot-based and non-pilot-based channel estimates are determined on the basis of the samples $Y_1$, $\hat{Y}_2$, $\hat{Y}_3$, $Y_4$, $Y_5$, $Y_6$, $Y_7$, $Y_8$, $Y_9$, the known pilot symbols $X_1$, $X_5$, $X_9$, and the first data symbol estimates $\hat{X}_2$, $\hat{X}_3$, $\hat{X}_4$, $\hat{X}_6$, $\hat{X}_7$, $\hat{X}_8$. The pilot-based and non-pilot-based channel estimates are represented in the graphical representation 480, and are also referred to as "existing channel estimates". From the pilot-based and non-pilot-based channel estimates (also designated as existing channel estimates) the channel estimates within the filter window are used for the filtering. The filter forms a sum multiplying the existing channel estimates at the i-th position within the filter window with the i-th filter coefficient c'(i).

In other words, the existing channel estimate for a symbol position $(w-M_1)$ is multiplied with the first filter coefficient c'(1), and the existing channel estimate at the symbol position $(w+N_2)$ is multiplied with the $(N_1+N_2+1)$-th filter coefficient c' $(N_1+N_{2+}1)$. So, i'=i+w-N_1-1. The products between the existing channel estimates and the corresponding filter coefficients are then summed-up to form the processed channel estimate at symbol position w. The processed channel estimate is designated with $\hat{H}_w$ or $\hat{H}_w^{(ni+1)}$, wherein the index $(n_i+1)$ indicates the $(n_i+1)$-th iteration.

Further, if the weighted quality measure 468 indicates that the reliability does not exceed the reliability threshold, a previously calculated channel estimate is returned as the processed channel estimate for the symbol position w in step 490.

The procedure may be repeated for different symbol positions w, wherein the filter window is typically shifted corresponding to a new symbol position w, for which the next processed channel estimate is to be calculated.

When the procedure has been performed for one more symbol positions w, the processed channel estimate or channel estimates $\hat{H}_w^{(ni+1)}$ can be used to replace the initial pilot-only-based channel estimates shown in the graphical representation 440. Thus, the procedure of decoding non-pilot-symbols, determining quality measures for the decoded non-pilot-symbols, calculating a weighted quality measure, checking for the reliability threshold and filtering can be repeated using the processed channel estimates, until sufficiently accurate channel estimates are obtained.

In other words, if the channel estimates are not yet sufficiently accurate (with respect to any possible accuracy measure known to a man skilled in the art, for example an expected mean-squared-error or a convergence value) non-pilot symbols are again decoded using the newly calculated processed channel estimates. The repetition is shown by the repetition arrow 497.

In the following, the inventive procedure described already with respect to Figs. 3, 4a, and 4b will be described thoroughly in terms of equations.

In this section, we denote by $\hat{H}_{k,n}^{(n_i)}, n_i = 0, 1, 2, ..., N$, the channel estimates obtained after the $n_i$-th turbo iteration. The case $n_i = 0$ corresponds to initial channel estimates resulting from PACE (also designated as "existing channel estimates"). The subsequent channel estimates are computed recursively, i.e. $\hat{H}_{k,n}^{(n_i+1)}$ is function of $\hat{H}_{k,n}^{(n_i)}$ and channel estimates resulting from the standard ICE procedure.

In other words, $\hat{H}_{k,n}^{(0)}$ represents the pilot-only-based channel estimates shown in the graphical representation 440 of Fig. 4a.

In the following, the modified iterative channel estimation (ICE) procedure will be described.

For the threshold-based iterative channel estimation technique, the standard ICE algorithm described above is modified as follows:

After the $n_i$-th turbo iteration, the channel estimates from the previous estimation stage are $\hat{H}_{k,n}^{(n_i)}$. At the next estimation stage, the channel estimates obtained after filtering in frequency direction become

$$\hat{H}_{k,n}^{(f,n_i+1)} = \begin{cases} \mathbf{c}_f'^T \cdot \widetilde{\mathbf{h}}_n & \text{if } \text{CEQI}_{k,n} \leq \alpha, \\ \hat{H}_{k,n}^{(n_i)} & otherwise. \end{cases} \qquad (9)$$

It should be noted that $\widetilde{\mathbf{h}}_n$ is defined as above as a vector comprising existing channel estimates formed by dividing sample value $Y_{k,n}$ by data symbol estimates $\hat{X}$. The scalar product $\mathbf{c}_f'^T \cdot \widetilde{\mathbf{h}}_n$ defines the filtering, as it is performed in the filter 360 of the device 300, or in the filtering of pilot-based and non-pilot-based channel estimates in the procedure described with reference to Fig. 4b. The index "f" indicates a filtering in a frequency direction of the symbol positions. However, the filtering operation may alternatively be performed in a time direction of the symbol positions (for example by applying a vector $\mathbf{c}_t'^T$ to the vector $\widetilde{\mathbf{h}}_n$). In other words, the vector $\mathbf{c}_f'^T$ summarizes filter coefficients of a Wiener-filter adapted to minimize noise distortions in the filtered channel estimates.

In the above equation (equation 9) $\text{CEQI}_{k,n}$ is a Channel Estimate Quality Indicator (CEQI) and $\alpha$ is the decision threshold. Two different types of CEQIs are presented in the next sections. Note that in (9), $\text{CEQI}_{k,n} \geq 0$, and that the case $\text{CEQI}_{k,n} = 0$ reflects a very high quality of the channel estimate.

After the threshold-based filtering stage in frequency direction carried out in (9), Wiener filtering in time direction follows as in (7) for the standard ICE procedure:

$$\hat{H}_{k,n}^{(n_1+1)} \;=\; \hat{H}_{k,n}^{(t,n_1+1)} \;=\; \mathbf{c'}_t^{\mathbf{T}} \cdot \hat{\mathbf{h}}_k^{(t,n_1+1)}$$

$$\hat{\mathbf{h}}_k^{(t,n_1+1)} \;=\; \left[ \hat{H}_{k,n-N_1}^{(t,n_1+1)}, \ldots, \hat{H}_{k,n+N_2}^{(t,n_1+1)} \right]^T \qquad (10)$$

Even though this second filtering stage is not absolutely necessary, filtering in time direction is a mean to further improve the quality of the final channel estimates, as in the standard ICE procedure.

The final estimates are fed to a soft-in/soft-out detector in order to complete a turbo iteration.

In the following, a channel estimation quality indicator (CEQI) based on symbol probabilities will be described. The channel estimation quality indicator based on symbol probabilities relies on the determination of a quality indicator for data symbol estimates, which will be described in the next sections.

From (2), the symbol probability obtained from the sample of log-likelihood ratios $L_1,...,L_{\log 2(Q)}$ reads

$$P(X = A_m) \;=\; \prod_{j=1}^{\log_2(Q)} f_{b_j(m)}(L_j), \qquad (11)$$

where the function $f_i(x)$ is defined in the appendix. In case of perfect feedback from the channel decoder, the magnitude $|L_i|$ of the LLRs is large and we have

$$P(X = A_m) = \begin{cases} 1 & \text{if } A_m \text{ is the transmitted symbol,} \\ 0 & \text{otherwise.} \end{cases}$$

without a priori information on the coded bits, or before the first decoding stage, the LLRs are equal to zero and the symbol probabilities read

$$P(X = A_m) \;=\; \frac{1}{M} \; \forall m \in [1, M]$$

Apart from these two extreme cases, the reliability of a soft or hard symbol estimate is difficult to estimate.

In other words, at a certain symbol position, several different data symbols out of the constellation alphabet {Am} could have been transmitted. Thus, the probability P(X = Am) indicates the probabilities for different data symbols with index m, based on the knowledge of the received symbol Y in the symbol position under consideration. In other words, the above-mentioned probabilities relate to the probability that in one particular symbol position a certain data symbol Am was transmitted.

However, it was found that considering only the maximum symbol probability as a measure of a data symbol estimate reliability is not sufficient.

In the case of two symbols having nearly the same a priori probability, this quality indicator may produce erroneously a high confidence factor. In the following, we consider therefore a relative quality indicator expressing the ratio of the probability of the most probable symbol to the probability of the second most probable symbol. Let denote by (P1, ..., PM) the list of symbol probabilities in descending order. The first and last values of this sorted list read then:

$$P_1 \;=\; \max_{i=1,\ldots,M} \{P(X = A_m)\}$$

$$\qquad (12)$$

$$P_M \;=\; \min_{i=1,\ldots,M} \{P(X = A_m)\}$$

The proposed data symbol estimate quality indicator (EQI) is defined by the ratio of the second-highest symbol probability $P_2$ to the highest symbol probability $P_1$ :

$$\text{EQI} = \frac{P_2}{P_1} \qquad (13)$$

Obviously, in case of perfect channel decoder feedback, $P_2 = 0$ and $P_1 = 1$ so that EQI = 0. Without reliable information on the coded bits, we have $P_1 = P_2 = 1/M$ and EQI = 1. It is straightforward to deduce from these observations and (13) that $0 \leq \text{EQI} \leq 1$, and that EQI decreases when the reliability of the a priori information on the coded bits increases.

The main property of this quality indicator is to express the reliability of the soft information associated to the bit having the smallest confidence level. With a higher-order modulation alphabet, the number of bits a constellation symbol is mapped onto is large and the Quality Indicator is on average lower than that of a small modulation alphabet for log-likelihood ratios having the same average magnitude. This reflects among others the fact that ICE performs significantly better with small modulation alphabets such as BPSK or QPSK than with 16-/64-QAM modulation. Moreover, it can be easily shown that for a fixed quality indicator value, all bits forming a symbol estimate have a certain minimum confidence level. The measure of reliability for symbol estimates from (13) is similar to that introduced in [6][7] to control the confidence of hard or soft feedback decisions.

For BSPK modulation, the ratio $P_2/P_1$ is a function of a single log-likelihood ratio L:

$$\text{EQI} = \frac{P_2}{P_1} \qquad (14)$$

$$= \begin{cases} e^{-L} & \text{if } L \geq 0, \\ e^{L} & \text{if } L < 0. \end{cases} \qquad (15)$$

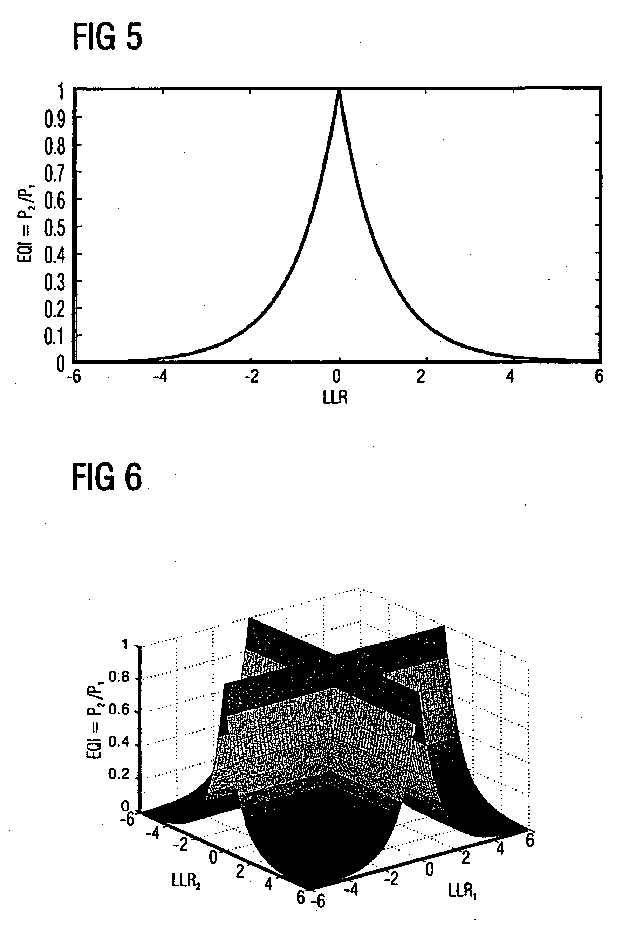

The EQI function for BPSK is depicted on Fig. 5. The peak around the origin represents the area where the channel decoder feedback is not sufficiently reliable.

For QPSK, the quality indicator is a function of two LLRs and is represented graphically on Fig. 6. The plot shows again the accuracy of the quality indicator: if two symbols are equally probable, the EQI function generates the worst quality indicator, i.e. EQI = 1. The EQI achieves only a small value in the corners, where the magnitude of both log-likelihood ratios is large.

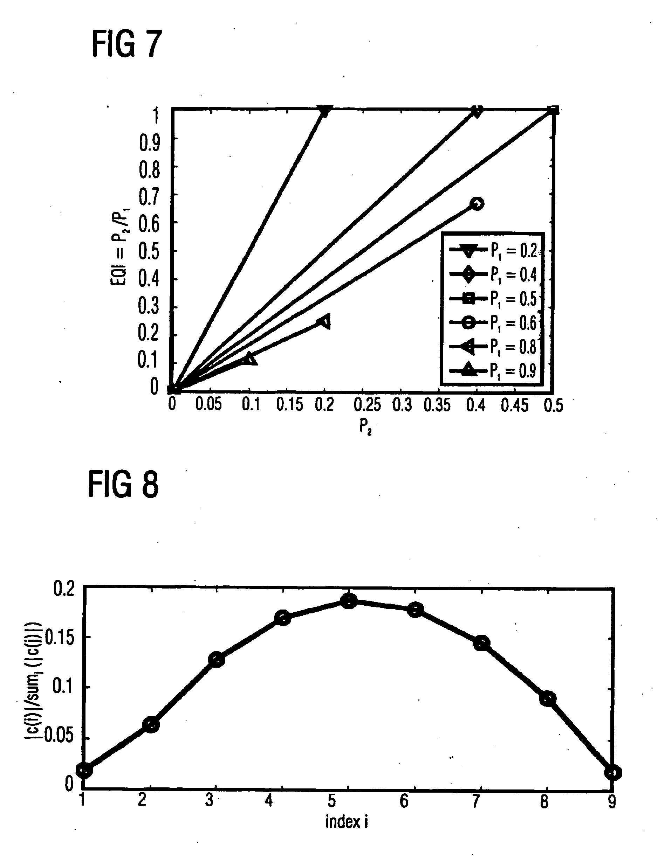

Fig. 7 shows the value of the quality indicator EQI as a function of $P_2$ for diverse values of $P_1$. For small values of $P_1$, the EQI increases rapidly with $P_2$. If the confidence level of the channel decoder feedback is high ($P_1 > 0.5$), the EQI is upper bounded by $EQI_{max} = (1/P_1 - 1) < 1$ and grows less rapidly with $P_2$. Obviously, $EQI_{max}$ is a decreasing function of $P_1$ and $EQI_{max} = 0$ when $P_1 = 1$.

Note that at pilot symbol position, we set EQI=0 as pilot symbols can be considered as perfectly known data symbols.

It should be noted here that for the quality measure, any other quality measures may be used exhibiting the same characteristics as the EQI with a quotient of the second highest symbol probability $P_2$ and the highest symbol probability $P_1$. Furthermore, it should be noted that the EQI described in the previous section may constitute the quality measure 312 in the device 300, and may further form one of the quality measures designated with rel2, rel3, rel4, rel6, rel7, rel8, in the procedure of Fig. 4b. Furthermore, it should be noted that the quality measure used in the inventive device and method should preferably be within a bounded range. Apart from that it is advantageous that the quality measure exhibits a minimum absolute value for perfect reliability of the corresponding data symbol estimates, and a maximum absolute value for the worst possible reliability of the corresponding data symbol estimates. This is advantageous because the quality measures are preferably weighted with values describing the absolute magnitude of the filter coefficients. If a single data estimate is unreliable at a symbol position to which a large filter coefficient is applied, the total weighted quality measure should have a high value indicating a bad total reliability. In other words, there should be no possibility to compensate for a relatively high unreliability in a strongly weighted symbol position, as a single strongly weighted unreliable data estimate will degrade the reliability of the total channel estimation.

In the following section, it will be described how the quality indicator for the channel estimates (also designated as CEQI or weighted quality measure) can be evaluated.

The quality indicator of the data symbol estimates is computed over the entire time-frequency plane (i.e. for all symbol positions) (or, alternatively, only for symbol positions used for the calculation of a required processed channel estimate) of the OFDM frame according to (13) so that we obtain $EQI_{k,n}$ for $1 \leq n \leq Nc$ and $1 \leq k \leq T$ ($N_c$ describing a number of frequency channels under consideration, and T describing a number of time intervals under consideration).

With ICE, the channel estimates obtained after the first filtering stage in frequency direction read (5):

$$\hat{H}_{k,n}^{(t)} = \mathbf{c'}_f^{\mathsf{T}} \cdot \tilde{\mathbf{h}}_n$$

$$\tilde{\mathbf{h}}_n = \left[ \frac{Y_{k,n-N_1}}{\hat{X}_{k,n-N_1}}, \cdots, \frac{Y_{k,n+N_2}}{\hat{X}_{k,n+N_2}} \right]^{\mathsf{T}}$$

where $\mathbf{c}_f = [c'_f(1), ...., c'_f(M_F)]^{\mathsf{T}}$.

$M_f$ is the size of the filter window, and $c'_f(1) ... c'_f(M_f)$ are the coefficients of the Wiener filter.

From the previous section, we arrange estimate quality indicators $EQI_{k,n-N_1},...,EQI_{k,n+N_2}$ of symbol positions within the filter window corresponding to the sequence of data symbol estimates $\hat{X}_{k,n-N_1},...,\hat{X}_{k,n+N_2}$ at symbol positions within the filter window. The quality indicator $CEQI_{k,n}$ associated the channel estimate $\hat{H}_{k,n}^{(j)}$ is then defined by

$$CEQI_{k,n} = \left( \sum_{i=1}^{M_F} \left| c'_f(i) \right| \right)^{-1} \cdot \sum_{i=1}^{M_F} \left| c'_f(i) \right| \cdot EQI_{k,n-N_1+i-1} \qquad (16)$$

where $M_F = (N_2 + N_1 + 1)$ denotes the order of the Wiener filter in frequency direction. The above equation can be seen as a weighted sum of the estimate quality indicators EQIk,n over the filtering window, where the weights are related to the amplitude of the Wiener filter coefficients. The filter coefficients at the center of the filtering window have indeed a greater impact on the calculation of the channel estimate than the coefficients located at the border of the filtering window. This important aspect has been overlooked in previous threshold-based ICE algorithms based on iterative filtering, e.g. in [6][7], and makes the modified ICE scheme particularly efficient. A graphical representation of the weighted amplitude of the Wiener filter coefficients is given on Fig. 8 for a filtering window of size $M_F$.

In the selection procedure (9), the threshold factor $0 \leq \alpha \leq 1$ is of crucial importance for the performance of this threshold-based iterative channel estimation scheme.

If a low, conservative, value is chosen, a very large number of turbo iterations is required to achieve a good performance level, and improvements of the channel estimation performance over several iterations would even be hindered at low SNR by an excessive stringency of the selection criterion.

On the other hand, if the threshold is high, the choice of the channel estimate based on the selection rule from (9) is less relevant which entails a performance degradation when the reliability of the channel decoder feedback is low. With a high threshold however, a good performance is achieved more rapidly, i.e. with a small number of turbo iterations, if the reliability of the channel decoder feedback is nearly perfect.

An optimal value for $\alpha$ is difficult to determine analytically. An optimal threshold can be obtained via Monte Carlo simulations, where the performance of the threshold-based ICE technique is assessed with various values of $\alpha$. For the numerical simulations detailed in the next section, the optimal value of the threshold has been found to be $\alpha_{opt} = 0.3$.

However, it should be noted that it is preferred to choose the value of the threshold within a range of 0.0 to 1.0.

In the following, a calculation of a channel estimate quality indicator (CEQI) based on an effective signal-to-noise ratio (SNR) will be described.

The channel MSE $\sigma_H^2(k, n)$ corresponding to a given channel estimate $\hat{H}_{k,n}^{(t)}$ obtained by Wiener filtering in frequency direction is given by [9]:

$$\sigma_H^2(k,n) = \underbrace{\varepsilon\left\{\left|H_{k,n}\right|^2\right\} - 2\operatorname{Re}\left\{\mathbf{c}_f'^H\, \mathbf{r}_{HH,f}\right\} + \mathbf{c}_f'^H\, \mathbf{R}_{HH,f}\mathbf{c}_f'}_{\sigma_i^2(k,n)} + \underbrace{\mathbf{c}_f'^H\, \mathbf{R}_{\tilde{N}\tilde{N}}\mathbf{c}_f'}_{\sigma_i^2(k,n)} \qquad (17)$$

In the above equation, $\sigma_i^2(k,n)$ is the part of the channel MSE related to the interpolation error, and $\sigma_i^2(k,n)$ depends on the noise variance. $\mathbf{R}_{\tilde{N}\tilde{N}}$ is a diagonal matrix related to the SNR. In (17), the two components of the channel MSE depend on the subcarrier position (k,n). Following an argument from [5], the effective SNR visible to the standard iterative channel estimator reads:

$$SNR_{\mathit{eff}:k,n} = \frac{\left|\hat{X}_{k,n}\right|^2}{\sigma_{N'}^2} \qquad (18)$$

where $\sigma_{N'}^2 = \varepsilon\left\{\left|Y_{k,n} - \hat{X}_{k,n}H_{k,n}\right|^2\right\}$ denotes the variance of the effective noise, larger than that of the thermal noise when the channel decoder feedback is not perfect. The effective SNR is used to give an estimate of the channel MSE achieved with the standard ICE technique by employing the preceding equation for the evaluation of $\mathbf{R}_{\tilde{N}\tilde{N}}$ in (17). The resulting channel MSE can be compared to the channel MSE obtained with PACE $\sigma_{H,PACE}^2$ to select the best candidate. In other words, the decision-based algorithm from (9) reads in this case:

$$\hat{H}_{k,n}^{(f,n_i+1)} = \begin{cases} \mathbf{c}_f'^T\cdot\tilde{\mathbf{h}}_n & \text{if } \sigma_i^2(k,\,n) \leq \sigma_{H,PACE}^2 - \sigma_i^2(k,\,n), \\ \hat{H}_{k,n}^{(n_i)} & \text{otherwise} \end{cases} \qquad (19)$$

In other words, the mean squared error of a channel estimation depending on a noise variance is used as the weighted quality measure (CEQI).

In other words:

$$CEQI = \mathbf{c}_f'^H\, \mathbf{R}_{\tilde{N}\tilde{N}}\mathbf{c}_f'\,.$$

The channel estimate quality indicator as defined in the above equation can also be written as

$$CEQI_{k,n} = \sum_{i=1}^{M_F}\left|c_f'(i)\right|^2\,\frac{\sigma_{\tilde{N}'}^2}{\left|\hat{X}_{k,n-N_1+i-1}\right|^2}$$

In other words, the channel estimate quality indicator is a weighted sum over the filter window (i = 1 to $M_F$) of estimates of noise-to-signal ratios, weighted with squared magnitudes of the corresponding filter coefficients. It should be noted here that individual noise-to-signal ratios (wherein an estimated noise-to-signal ratio is the inverse of an estimated signal-to-noise ratio) are typically considered for different symbol positions. The noise-to-signal ratio, i.e. the term

$$\frac{\sigma_{\tilde{N}'}^2}{\left|\hat{X}_{k,n-N_1+i-1}\right|^2} ,$$

is typically dependent on a symbol position. The described noise-to-signal-ratio (or signal-to-noise ratio) can be calculated as the quotient of an estimated variance $\sigma_{\tilde{N}'}^2$ and the squared magnitude of a data symbol estimate $\hat{X}$.

The estimate of the variance of the effective noise is preferably calculated to consider errors introduced by noise on the channel and errors of the data symbol estimates $\hat{X}$. Furthermore, the noise-to-signal ratio considers the magnitude of the data symbol estimates $\hat{X}$ in that the reliability is considered to increase with increasing magnitude of the data symbol estimates.

The threshold value $\alpha$ is formed on the basis of an estimate of a variance (or mean squared error) of the channel estimates produced by a pilot only based channel estimation. Thus, the threshold value $\alpha$ for determining, whether the weighted quality measure indicates a sufficient reliability, is smaller than or equal to the variance (or mean squared error) of the pilot-only-based channel estimates. Consequently, it is ensured that the channel estimate is only updated if it can be expected that the updated channel estimate is more accurate than the initial (existing) channel estimate obtained by a pilot-only-based channel estimation.

However, typically the threshold value determinator is adapted to select the threshold value $\alpha$ such that the threshold value is equal to the variance (or mean squared error) of the channel estimates obtained by a pilot-only-based channel estimation minus an interpolation error expected to be introduced by a channel estimation on the basis of a filtering of the existing channel estimates.

In a preferred embodiment, the threshold value $\alpha$ is chosen to be equal to an estimated variance (or mean squared error) of channel estimates obtained by the pilot only based channel estimate, minus a predetermined value. Thus, it can be ensured that the channel estimation based on filtering the existing channel estimates brings along a result, which is better than the channel estimate obtained using pilot symbols only.

Further, the predetermined value can be replaced by a set of predetermined values, one of which is selected in dependence on the filter coefficients.

In other words, the interpolation error $\sigma_1^2(k, n)$ depends essentially on the Wiener filter bank $\mathbf{c'_f}$ so that a set of pre-computed values for $\sigma_1^2(k, n)$ can be employed in the above equation for the computation of the threshold $\alpha = \left(\sigma_{H,PACE}^2 - \sigma_1^2(k, n)\right)$. The evaluation of the noise component $\sigma_1^2(k, n) = \mathbf{c'_f}^H \mathbf{R}_{\tilde{N}\tilde{N}} \mathbf{c'_f}$ can be refined by estimating the effective SNR on each OFDM subcarrier utilized for FIR filtering. In this case, we have

$$\left(R_{\tilde{N}\tilde{N}}\right)_{i,i} = \frac{\sigma_{\tilde{N}'}^2}{\left|\hat{X}_{k,n-N_1+i-1}\right|^2} . \tag{20}$$

where $\sigma_{N'}^2 = \varepsilon\left\{\left|Y_{k,n} - \hat{X}_{k,n}\hat{H}_{k,n}^{(n_i)}\right|^2\right\}$ denotes an estimate of the variance of the effective noise introduced in (18).

It should be noted here that different estimates $\sigma_{N'}^2$ can be used, which are known by men skilled in the art. Further, the key idea of the present invention lies in the fact that the noise-to-signal ratios (also designated as $(R_{\tilde{N}\tilde{N}})_{i,i}$) are weighted by the magnitude (or squared magnitude) of the filter coefficients $c'_f(i)$.

In the following, simulation results of a bit error rate (BER) and a channel mean squared error (MSE) performance of the threshold-based iterative channel estimation techniques described above will be presented. In other words, the BER in channel-MSE performance of the threshold-based ICE techniques described above are investigated in this section.

We consider coded data transmission with a 16-QAM modulation alphabet over a time-varying, frequency selective channel defined within the framework of the IST-WINNER project for the wide area, macro urban propagation scenario ([10], channel model NLOS C2). An OFDM frame comprises K=11 OFDM symbols with $N_c$ = 1024 subcarriers. The channel encoder is a rate 1/2 convolutional code with generator polynomials (133,171) in octal form. The normalized Doppler frequency is set to $f_c$=0.0135, obtained at a mobile velocity of v=50 km/h for a carrier frequency of 5 GHz. The assumed system bandwidth is BW = 20 MHz and the OFDM symbol duration is T = 50$\mu$s. The subcarrier spacings in time and frequency directions fulfill the requirements imposed by the sampling theorem and are set respectively to $D_t$=5 and $D_f$=8. For ICE, the filter orders in time and frequency directions are respectively $M_f$=10 and $M_t$=3.

In the following, an ideal threshold based iterative channel estimation (ICE) technique will be described, which is used for reference purposes.

For comparison purpose, we address in this part a technique giving performance bounds for the new threshold-based channel estimation schemes. In (9), the choice of the channel estimate may be erroneous, i.e. the channel estimate with the highest channel MSE may be selected, which causes a performance degradation. In the ideal scenario, we assume that a genie channel estimation algorithm disposes of perfect knowledge of the MSE associated to the two potential channel estimates from (9), namely $\left\|H_{k,n} - \mathbf{c}'^T_f \cdot \tilde{\mathbf{h}}_n\right\|^2$ and $\left\|H_{k,n} - \hat{H}^{(n_i)}_{k,n}\right\|^2$. For the ideal threshold-based ICE technique, the channel estimate selected for the next turbo iteration is obtained as follows:

$$\hat{H}^{(n_i+1)}_{k,n} = \hat{H}^{(f,n_i+1)}_{k,n} = \begin{cases} \mathbf{c}'^T_f \cdot \tilde{\mathbf{h}}_n & \text{if } \left\|H_{k,n} - \mathbf{c}'^T_f \cdot \tilde{\mathbf{h}}_n\right\|^2 \leq \left\|H_{k,n} - \hat{H}^{(n_i)}_{k,n}\right\|^2, \\ \hat{H}^{(n_i)}_{k,n} & \text{otherwise.} \end{cases} \quad (21)$$

This threshold-based channel estimation scheme based on a error-free selection of the best channel estimate in (21) provides a bound on the performance of the threshold-based ICE procedure proposed in the previous section.

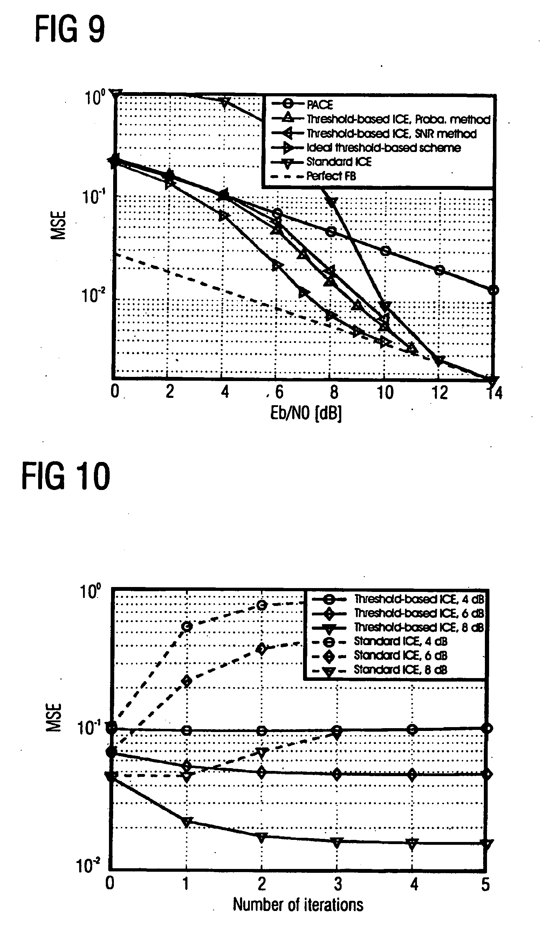

In the following, the channel mean squared error (MSE) performance of the inventive method will be described. Fig. 9 depicts the channel mean squared error in (MSE) performance of the new threshold based iterative channel estimation (ICE) techniques.

Fig. 9 shows a channel mean squared error (MSE) performance versus a ratio $E_b/N_0$ between a symbol energy and a noise energy or noise power density. Fig. 9 shows the performance of a pilot-only-based channel estimation (PACE), a standard iterative channel estimation (ICE), a threshold-based iterative channel estimation making use of the symbol probabilities as defined in equation 13, a threshold-based iterative channel estimation making of the effective signal-to-noise ratio according to equation 20, an ideal threshold-based iterative channel estimation and an iterative channel estimation with perfect channel decoder feedback (dashed line) after three turbo iterations.

For details with respect to the curves, reference is taken to the legend of Fig. 9. It can be seen from Fig. 9 that the new channel estimation algorithm clearly outperforms the standard ICE procedure in the low to medium SNR regime, particularly for small values of $E_b/N_0$. The proposed threshold-based algorithm performs as well as PACE at low SNR, while the performance gain of the threshold-based ICE technique over PACE increases in the high SNR regime. The lower bound on the channel MSE obtained with perfect decision feedback is attained from $E_b/N_0$ =11 dB.

The channel estimation performance of the new threshold-based ICE scheme in terms of the number of iterations is represented on Fig. 10. In other words, Fig. 10 shows a channel mean squared error (MSE) performance versus a number of iterations for a standard iterative channel estimation (dashed curves) and a threshold-based iterative channel estimation (symbol probabilities method; solid curves; making use of the EQI of Equation 13) at various values of Eb/N0.

With respect to the curves shown in Fig. 10, reference is made to the legend of Fig. 10. The values "4db", "6dB" and "8dB" designate different ratios $E_b/N_0$.

With standard ICE, no gain over multiple iterations is observed and the channel MSE even increases. For the threshold-based algorithm, the channel MSE remains stable or decreases from $E_b/N_0$=6 dB when the number of iteration grows. In contrast to the standard ICE technique, the threshold-based ICE method provides thus a performance gain over multiple iterations at low SNR. One can notice that the two threshold-based ICE techniques (based on symbol probabilities and based on effective SNR) show similar channel MSE performance, with a slightly better performance for the method relying on the symbol probabilities.

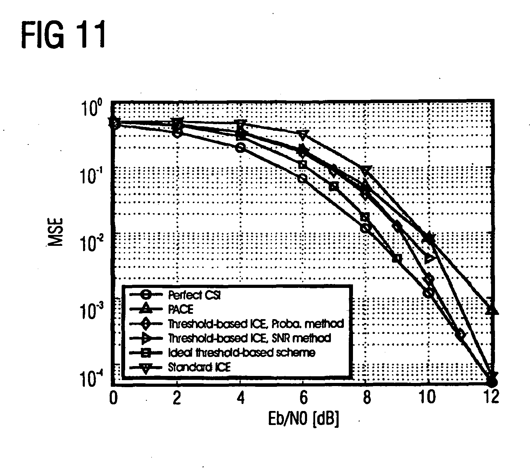

In the following, the bit error rate (BER) performance of the inventive concept will be compared with a performance of conventional concepts. The bit error rate (BER) performance of the new threshold-based iterative channel estimation scheme is shown in Fig. 11. Reference is made to the legend of Fig. 11, wherein the reference curve is plotted on the assumption that perfect channel state information (CSI) is available.

The study of the channel MSE performance addressed in the previous section is still valid for the investigation of the BER curves. The new ICE procedure outperforms standard ICE in terms of BER for $E_b/N_0 \leq 12$ dB. At BER = $10^{-2}$, the standard ICE scheme has a performance loss of 1 dB over the threshold-based ICE technique, but the dB margin shrinks when the SNR increases. The new ICE scheme exhibits a BER performance loss of only 1 dB at BER = $10^{-2}$ relative to perfect channel knowledge. This gap is reduced nearly to zero at BER = $10^{-3}$. Relative to the ideal threshold-based channel estimator, the proposed threshold-based ICE scheme has a performance degradation of only 0.7 dB at BER = $10^{-2}$. We observe finally that the threshold-based ICE technique relying on symbol probabilities performs slightly better than the method based on the effective SNR.

In the following, it will be described how bitwise log-likelihood ratios can be converted into bit probabilities.

Required to perform a soft or hard symbol mapping before the CE stage, the probability that the bits i has been transmitted given the Log Likelihood Ratio (LLR) x at this bit position is

$$f_i(x) = \frac{1}{2}\left(1 + (-1)^{i+1} \tanh\left(\frac{x}{2}\right)\right) \qquad (22)$$

Alternatively, one can distinguish between the cases i = 1 and i = 0 and rewrite $f_i(x)|_{i=\{1,0\}}$ as follows

$$f_0(x) = \frac{1}{e^x + 1} \qquad (23)$$

$$f_1(x) = \frac{1}{e^{-x} + 1} \qquad (24)$$

It can be concluded that the new threshold-based ICE algorithm provides significant channel MSE and BER performance gains over the standard ICE technique. At low SNR, the new scheme performs at least as well as PACE, and the detrimental effect of feedback decision errors on the channel estimation performance is minimized. For larger SNR values, the adaptive selection in (9) of the channel estimates enables a better system performance by taking into account channel estimates from the preceding turbo iteration in addition to estimates resulting from the standard ICE procedure. Otherwise, the evaluation of the channel estimate quality indicator (CEQI) in (16) or (19) does not increase noticeably the computational complexity at the receiver.

To summarize the above, the present invention creates a threshold-based iterative channel estimation algorithm that takes advantage of both pilot-aided and pure iterative channel estimation approaches. The novel algorithm uses a quality indicator of the channel estimates obtained with ICE to decide whether this estimate should be used in place of the existing channel estimate (e.g. derived from PACE) or not. The quality indicator of the channel estimates obtained with ICE depends on the Wiener filter coefficients and a quality indicator of the data symbol estimates. The quality indicator for data symbol estimates is directly derived from the log-likelihood ratios (LLRs,[8]) on the coded bits generated by the channel decoder after each turbo iteration.

Depending on certain implementation requirements of the inventive method, the inventive method can be implemented in hardware or in software. The implementation can be performed using a digital storage medium, for example a disk, DVD, CD, ROM, PROM, EPROM, EEPROM or FLASH-Memory, having electronically readable control signals stored thereon, which cooperate with a programmable computer system such that the inventive method is performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

In the following, the key advantages of the present invention will be summarized.

At low or medium signal-to-noise-ratio (SNR), the performance of the threshold-based iterative channel estimation method is improved gradually after several turbo iterations while the performance achieved with a standard ICE technique is not improved noticeably after the first or second turbo iteration. The new technique provides thus a better gain over multiple iterations. The threshold-based channel estimation technique is designed such that the new algorithm performs at least as well as PACE or standard ICE for any SNR value. Moreover, the proposed technique does not require costly computations at the receiver so that the decoding complexity remains almost unchanged.

**EP 1 830 529 B1**

Terminology and Abbreviations

| | |
|---|---|
| APP | A Posteriori Probability |
| BICM | Bit Interleaved Coded Modulation |
| CE | Channel Estimation |
| CP | Cyclic Prefix |
| CTF | Channel Transfer Function |
| ICE | Iterative Channel Estimation |
| LLR | Log Likelihood Ratio |
| LS | Least Square |
| MMSE | Minimum Mean Squared Error |
| M-PSK | M-ary Phase-Shift Keying |
| OFDM | Orthogonal Frequency Division Multiplexing |
| PACE | Pilot Aided Channel Estimation |
| QAM | Quadrature Amplitude Modulation |
| QPSK | Quadrature Phase-Shift Keying |
| SNR | Signal-to-Noise Ratio |

References

[1]S. ten Brink, F. Sanzi, and J. Speidel, "Two-Dimensional Iterative APP Channel Estimation and Decoding for OFDM Systems," IEEE GLOBECOM 2000, vol. 2, pp. 741-745, 2000.

[2]F. Sanzi, S. Jelting and J. Speidel, "A comparative study of iterative channel estimators for mobile OFDM systems," IEEE Trans. on Wireless Communications, vol. 5, no. 2, pp. 849-859, September 2003.

[3]T. Zemen, M. Loncar, J. Wehinger, C. Mecklenbraüker, and R. Müller, "Improved Channel Estimation for Iterative Receivers," IEEE Global Telecommunications Conference (GLOBECOM), vol. 1, pp. 257-261, December 2003.

[4]T. Zemen, J. Wehinger, C. Mecklenbraüker, and R. Müller, "Iterative detection and channel estimation for MC-CDMA," IEEE International Conference on Communications (ICC), vol. 5, pp. 3462-3466, May 2003.

[5]J. Bonnet and G. Auer, "Optimized Iterative Channel Estimation for OFDM," submitted to IEEE International Conference on Communications (ICC), 2006.

[6]Y. Xu, H.-S. Su and E. Geraniotis, "Pilot Symbol Assisted QAM with Iterative Filtering and Turbo Decoding over Rayleigh Flat-Fading Channels," IEEE Military Communications Conference (MILCOM), vol. 1, pp. 86-91, 1999.

[7]H. Niu and J. A. Ritcey, "Iterative channel estimation and decoding of pilot symbol assisted LDPC coded QAM over flat fading channels," ASILOMAR Conference on Signals, Systems and Computers, vol. 2, pp. 2265-2269, November 2003.

[8]J. Hagenauer, E. Offer and L. Papke, "Iterative decoding of binary blocks and convolutional codes," IEEE Trans. Inform. Theory, vol. 42, pp. 429-445, March 1996.

[9]G. Auer, "Modeling of OFDM Channel Estimation Errors," International OFDM-Workshop, September 2005.

[10] IST-2003-507581 WINNER, "D5.4 Final Report on Link Level and System Level Channel Models," September 2005.

**Claims**

1. A channel estimator (300) for obtaining a processed channel estimate $\left(\hat{H}_{w}^{(n_i+1)}; \hat{H}_{k,n}^{(n_i+1)}\right)$ for a symbol position (k,n; w) in time or frequency using existing channel estimates $(Y/\hat{X})$ for a plurality of symbol positions in time or frequency, the channel estimator comprising:

   a determinator (310) for determining quality measures (EQI; $SNR_{eff}$) describing a reliability of data estimates $(\hat{X})$, corresponding with respect to symbol position to the existing channel estimates, of data transmitted in at least two different symbol positions;
   a weighter (330) for weighting the quality measures in dependence on filter coefficients (c') of a symbol-position filter (360) to obtain a weighted quality measure (CEQI),
   wherein the coefficients of the symbol-position-filter are adapted so that filtered channel estimates are less affected by channel distortions than channel estimates before filtering with the symbol-position-filter;
   a comparator (340) for comparing the weighted quality measure with a threshold value ($\alpha$); and
   a processor (350) for obtaining the processed channel estimate by filtering, using the filter coefficients, at least two channel estimates from the existing channel estimates, only if the weighted quality measure indicates a reliability exceeding a reliability threshold.

2. The channel estimator (300) of claim 1, wherein the processor (350) is adapted to provide a previously computed channel estimate $\left(\hat{H}_{k,n}^{n_i}\right)$ as the processed channel estimate $\left(\hat{H}_{w}^{(n_i+1)}; \hat{H}_{k,n}^{(n_i+1)}\right)$, if the weighted quality measure (CEQI) indicates a reliability smaller than the reliability threshold.

3. The channel estimator (300) of claim 1 or claim 2, wherein the filter (360) comprises a filter window, wherein the filter is adapted to combine channel estimates from symbol positions (k,n) within the filter window to generate the processed channel estimate $\left(\hat{H}_{w}^{(n_i+1)}; \hat{H}_{k,n}^{(n_i+1)}\right)$; and
   wherein the filter coefficients (c') describe the contribution of individual existing channel estimates within the filter window to the processed channel estimate.

4. The channel estimator (300) of claim 3, wherein the channel estimator is adapted to calculate the processed channel estimates $\left(\hat{H}_{w}^{(n_i+1)}; \hat{H}_{k,n}^{(n_i+1)}\right)$ as a weighted sum of existing channel estimates within the filter window, the weight of the individual existing channel estimates being determined by the filter coefficient (c').

5. The channel estimator (300) of claim 3 or 4, wherein at least two filter coefficients (c') are different from 0, so that at least two existing channel estimates are combined to obtain the processed channel estimate $\left(\hat{H}_{w}^{(n_i+1)}; \hat{H}_{k,n}^{(n_i+1)}\right)$.

6. The channel estimator (300) of one of claims 1 to 5, wherein the symbol-position-filter (360) is a Wiener-filter, and wherein the channel estimator comprises a filter-coefficient-determinator for deriving the filter coefficients (c') of the symbol-position-filter (360) from a noise value $\left(\sigma_{N}^{2}\right)$ and an auto-correlation-matrix ($R_{HH}$) of a channel transfer function of the channel, such that the Wiener-filter reduces an impact of noise of the existing channel estimates on the processed channel estimate $\left(\hat{H}_{w}^{(n_i+1)}; \hat{H}_{k,n}^{(n_i+1)}\right)$.

7. The channel estimator (300) of claim 6, wherein the symbol-position-filter (360) is a linear-finite-impulse-response filter for determining the processed channel estimate $\hat{H}_{k,n}$ by performing a vector-scalar-product-operation of the form

$$\hat{H}_{k,n} = c'^{T} \cdot \tilde{h}_{n},$$

wherein $c'^T$ is a transposed filter coefficient vector comprising at least two filter coefficients (c'), and wherein $\tilde{h}_n$ is a vector comprising at least two existing channel estimates ($\tilde{H}_{k,n_1}\tilde{H}_{k,n_2}$); and

wherein the filter coefficient determinator is adapted to determine the filter coefficient vector (c') according to

$$ \mathbf{c}' = \left( \mathbf{R}_{HH} + \left( \frac{\sigma_N^2}{E_S} \right) \cdot \mathbf{I} \right)^{-1} \cdot \mathbf{r}_{HH}, $$

wherein $R_{HH}$ is an auto-correlation-matrix of a channel transfer function,

wherein $\sigma_N^2$ is a noise value describing a noise of the channel,

wherein $E_s$ is a symbol energy of transmitted data symbols,

wherein **I** is an identity matrix, and

wherein $r_{HH}$ is a cross-correlation vector expressing a correlation between a derived channel transfer function and channel transfer functions from the entire filter window.

8. The channel estimator (300) of one of claims 1 to 7, wherein the determinator (310) for determining quality measures (EQI; $SNR_{eff}$) describing the reliability of the data estimates is adapted to calculate symbol probabilities (P1, P2, $P_M$) for possible data symbols at symbol positions used for deriving the processed channel estimate, the symbol probability of a certain data symbol describing a probability that a sender has transmitted the certain data symbol out of a set of possible data symbols at a certain symbol position, based on a received data symbol at the certain symbol position, and wherein the determinator is further adapted to derive the quality measures (EQI; $SNR_{eff}$) of the data estimates from the symbol probabilities.

9. The channel estimator (300) of claim 8, wherein the determinator (310) is adapted to derive the quality measure (EQI) at a given symbol position by determining a symbol probability of a most probable data symbol at the given symbol position and a symbol probability of a second-most-probable data symbol at the given symbol position, and by determining the quality measure as a quotient of the symbol probability (P2) of the second-most-probable data symbol and the symbol probability (P1) of the most-probable data symbol.

10. The channel estimator (300) of one of claims 1 to 9, wherein the determinator (310) is adapted to obtain effective signal-to-noise-ratios ($SNR_{eff}$) or noise-to-signal-ratios for the at least two different symbol positions as the quality measures.

11. The channel estimator (300) of claim 10, wherein the determinator (310) is adapted to obtain the effective signal-to-noise-ratio or noise-to-signal-ratio at a certain symbol position by forming a quotient of an energy measure ($|\hat{X}|^2$) of an estimated data symbol ($\hat{X}$) at the certain symbol position and a noise value $(\sigma_{\hat{N}}^2)$ describing an effective noise taking into consideration the variance of the data symbols for the determination of the estimated data symbol at the certain symbol position.

12. The channel estimator (300) of one of claims 1 to 11, wherein the weighter (330) is adapted to weight the quality measures (EQI; $SNR_{eff}$) with absolute magnitudes (|c'|) of the filter coefficients to obtain the weighted quality measures (CEQI).

13. The channel estimator (300) of claim 12, wherein the weighter (330) is further adapted to weight the quality measures (EQI) by forming a quotient between a sum of quality measures (EQI) weighted with absolute values (|c'|) of the filter coefficients (c') and a sum of the absolute values of the filter coefficients.

14. The channel estimator (300) of one of claim 1 to 12, wherein the weighter (330) is adapted to weight the quality measures (EQI; $SNR_{eff}$) with squares ($|c'|^2$) of absolute magnitudes of the filter coefficients.

15. The channel estimator (300) of one of claims 1 to 14, wherein the threshold value ($\alpha$) is a predetermined fixed value.

**16.** The channel estimator (300) of one of claims 1 to 14, wherein the channel estimator comprises a threshold value determinator adapted to determine the threshold value ($\alpha$) on the basis of an estimate of a mean-squared-error of a channel estimate obtained by a pilot-only-based channel estimation.

**17.** The channel estimator (300) of claim 16, wherein the threshold value determinator is adapted to introduce into the threshold value ($\alpha$) a term describing an expected interpolation error of the filter (360) in dependence on the filter coefficients.

**18.** The channel estimator (300) of one of claims 1 to 17, wherein the symbol positions (k,n; w) are different sub-carriers of an OFDM modulation scheme.

**19.** The channel estimator (300) of one of claims 1 to 17, wherein the symbol positions (k,n; w) are subsequent time intervals of an OFDM modulation scheme.

**20.** The channel estimator (300) of one of claims 1 to 19, wherein the determinator (310) is adapted to set the quality measures (EQI; $SNR_{eff}$) to a value indicating an optimal reliability at symbol positions where a pilot symbol is transmitted.

**21.** The channel estimator (300) of one of claims 1 to 20, wherein the channel estimator is adapted such that the quality measures (EQI; $SNR_{eff}$) correspond, with respect to the symbol position, to existing channel estimates ($\tilde{H}_{k,n}$), and wherein the weighter (330) is adapted to weight a certain quality measure in dependence on the same filter coefficient ($c'$) which is applied in the filtering to the existing channel estimate corresponding to the certain quality measures.

**22.** The channel estimator (300) of one of claims 1 to 21, wherein the determinator (310) and the weighter (330) are adapted such that the weighted quality measure (CEQI) describes a reliability of the processed channel estimate derived from the existing channel estimates, the existing channel estimates being based on the data estimates.

**23.** The channel estimator (300) of one of claims 1 to 22, wherein the determinator (310) is adapted to determine the quality measures (EQI; $SNR_{eff}$) such that the quality measures describe the reliability of data estimates ($\hat{X}$) used to provide the existing channel estimates ($\tilde{H}$).

**24.** The channel estimator (300) of one of claims 1 to 23, wherein the channel estimator is adapted to iteratively improve the processed channel estimate, and to calculate the existing channel estimates for a certain iteration on the basis of data estimates ($\hat{X}$) determined using a channel estimate computed in a previous iteration and modulation symbols (Y) of data symbols transmitted in the at least two symbol positions (k,n; w).

**25.** The channel estimator (300) of one of claims 1 to 24, wherein the channel estimator is adapted to calculate the existing channel estimates ($\tilde{H}$) as quotients between received modulation symbols (Y) of data symbols transmitted in the at least two symbol positions (k,n; w) and the data estimates determined using a previously computed channel estimate.

**26.** The channel estimator (300) of one of claims 1 to 25, wherein the data estimates ($\hat{X}$) are soft-decision data estimates or hard symbols, formed by a summation of possible data symbols ($A_m$), weighted with corresponding probabilities ($P(X=A_m)$) descriptive of the likelihood that the respective data symbol ($A_m$) was transmitted.

**27.** A method (300) for obtaining a processed channel estimate $\left(\hat{H}_w^{(n_i+1)}\right)$ for a symbol position (k,n; w) in time or frequency using existing channel estimates ($Y/\hat{X}$) for a plurality of symbol positions in time or frequency, the method comprising steps of:

determining quality measures (EQI; SNReff) describing a reliability of data estimates ($\hat{X}$), corresponding with respect to symbol position to the existing channel estimates, of data transmitted in at least two different symbol positions;
weighting the quality measures in dependence on filter coefficients ($c'$) of a symbol-position-filter (360) to obtain a weighted quality measure (CEQI),
wherein the coefficients of the symbol-position-filter are adapted so that filtered channel estimates are less affected by channel distortions than channel estimates before filtering with the symbol-position-filter;
comparing the weighted quality measure with a threshold value ($\alpha$) ; and

only if the weighted quality measure indicates a reliability exceeding a reliability threshold, obtaining the processed channel estimate by filtering, using the filter coefficients, at least two channel estimates from the existing channel estimate.

**28.** A computer program for executing the method of claim 27, when the computer program runs on a computer.

**Patentansprüche**

**1.** Ein Kanalschätzer (300) zum Erhalten eines verarbeiteten Kanalschätzwertes ($\hat{H}_w^{(n_i+1)}$; $\hat{H}_{k,n}^{(n_i+1)}$) für eine Symbolposition (k, n; w) in Zeit oder Frequenz unter Verwendung von existierenden Kanalschätzwerten (Y/$\hat{X}$) für eine Mehrzahl von Symbolpositionen in Zeit oder Frequenz, wobei der Kanalschätzer folgende Merkmale aufweist:

einen Bestimmer (310) zum Bestimmen von Qualitätsmesswerten (EQI; $SNR_{eff}$), die eine Zuverlässigkeit von Datenschätzwerten (X) beschreiben und bezüglich einer Symbolposition den existierenden Kanalschätzwerten entsprechen, von Daten, die in zumindest zwei unterschiedlichen Symbolpositionen gesendet werden;
einen Gewichter (330) zum Gewichten der Qualitätsmesswerte in Abhängigkeit von Filterkoeffizienten (c') eines Symbolpositionsfilters (360), um einen gewichteten Qualitätsmesswert (CEQI) zu erhalten,
wobei die Koeffizienten des Symbolpositionsfilters angepasst sind, so dass gefilterte Kanalschätzwerte weniger durch Kanalverzerrungen beeinflusst werden als Kanalschätzwerte vor einem Filtern mit dem Symbolpositionsfilter;
einen Komparator (340) zum Vergleichen des gewichteten Qualitätsmesswertes mit einem Schwellenwert ($\alpha$); und
einen Prozessor (350) zum Erhalten des verarbeiteten Kanalschätzwertes durch ein Filtern von zumindest zwei Kanalschätzwerten von den existierenden Kanalschätzwerten unter Verwendung der Filterkoeffizienten, lediglich, wenn der gewichtete Qualitätsmesswert eine Zuverlässigkeit anzeigt, die eine Zuverlässigkeitsschwelle überschreitet.

**2.** Der Kanalschätzer (300) gemäß Anspruch 1, bei dem der Prozessor (350) angepasst ist, um einen vorhergehend berechneten Kanalschätzwert ($\hat{H}_{k,n}^{n_i}$) als den verarbeiteten Kanalschätzwert ($\hat{H}_w^{(n_i+1)}$; $\hat{H}_{k,n}^{(n_i+1)}$) zu liefern, wenn der gewichtete Qualitätsmesswert (CEQI) eine Zuverlässigkeit kleiner als die Zuverlässigkeitsschwelle anzeigt.

**3.** Der Kanalschätzer (300) gemäß Anspruch 1 oder Anspruch 2, bei dem das Filter (360) ein Filterfenster aufweist, wobei das Filter angepasst ist, um Kanalschätzwerte aus Symbolpositionen (k, n) in dem Filterfenster zu kombinieren, um den verarbeiteten Kanalschätzwert ($\hat{H}_w^{(n_i+1)}$; $\hat{H}_{k,n}^{(n_i+1)}$) zu erzeugen; und wobei die Filterkoeffizienten (c') den Beitrag von individuellen existierenden Kanalschätzwerten in dem Filterfenster zu dem verarbeiteten Kanalschätzwert beschreiben.

**4.** Der Kanalschätzer (300) gemäß Anspruch 3, wobei der Kanalschätzer angepasst ist, um die verarbeiteten Kanalschätzwerte ($\hat{H}_w^{(n_i+1)}$; $\hat{H}_{k,n}^{(n_i+1)}$) als eine gewichtete Summe von existierenden Kanalschätzwerten in dem Filterfenster auszurechnen, wobei das Gewicht der individuellen existierenden Kanalschätzwerte durch den Filterkoeffizienten (c') bestimmt ist.

**5.** Der Kanalschätzer (300) gemäß Anspruch 3 oder 4, bei dem zumindest zwei Filterkoeffizienten (c') unterschiedlich von 0 sind, so dass zumindest zwei existierende Kanalschätzwerte kombiniert werden, um den verarbeiteten Kanalschätzwert ($\hat{H}_w^{(n_i+1)}$; $\hat{H}_{k,n}^{(n_i+1)}$) zu erhalten.

**6.** Der Kanalschätzer (300) gemäß einem der Ansprüche 1 bis 5, bei dem das Symbolpositionsfilter (360) ein Wiener-Filter ist und wobei der Kanalschätzer einen Filterkoeffizientenbestimmer zum Ableiten der Filterkoeffizienten (c') des Symbolpositionsfilters (360) von einem Rauschwert ($\sigma_N^2$) und einer Autokorrelationsmatrix ($R_{HH}$) einer Kanaltransferfunktion des Kanals aufweist, derart, dass das Wiener-Filter einen Einfluss eines Rauschens der existierenden Kanalschätzwerte auf den verarbeiteten Kanalschätzwert $(\hat{H}_w^{(n_i+1)}; \hat{H}_{k,n}^{(n_i+1)})$ reduziert.

**7.** Der Kanalschätzer (300) gemäß Anspruch 6, bei dem das Symbolpositionsfilter (360) ein Linear-Finite-Impulsantwort-Filter zum Bestimmen des verarbeiteten Kanalschätzwerts $\hat{H}_{k,n}$ durch ein Durchführen einer Vektor-Skalar-Produkt-Operation der Form

$$\hat{H}_{k,n} = c'^T \cdot \tilde{h}_n,$$

ist, wobei $c'^T$ ein transponierter Filterkoeffizientvektor ist, der zumindest zwei Filterkoeffizienten ($c'$) aufweist, und wobei $\tilde{h}_n$ ein Vektor ist, der zumindest zwei existierende Kanalschätzwerte ($\tilde{H}_{k,n_1}\tilde{H}_{k,n_2}$) aufweist; und
wobei der Filterkoeffizientenbestimmer angepasst ist, um den Filterkoeffizientenvektor ($c'$) gemäß

$$c' = \left( R_{HH} + \left( \frac{\sigma_N^2}{E_S} \right) \cdot I \right)^{-1} \cdot r_{HH},$$

zu bestimmen, wobei $R_{HH}$ eine Autokorrelationsmatrix einer Kanaltransferfunktion ist,

wobei $\sigma_N^2$ ein Rauschwert ist, der ein Rauschen des Kanals beschreibt,

wobei Es eine Symbolenergie von gesendeten Datensymbolen ist,
wobei I eine Identitätsmatrix ist, und
wobei $r_{HH}$ ein Kreuzkorrelationsvektor ist, der eine Korrelation zwischen einer abgeleiteten Kanaltransferfunktion und Kanaltransferfunktionen aus dem gesamten Filterfenster ausdrückt.

**8.** Der Kanalschätzer (300) gemäß einem der Ansprüche 1 bis 7, bei dem der Bestimmer (310) zum Bestimmen von Qualitätsmesswerten (EQI; $SNR_{eff}$), die die Zuverlässigkeit der Datenschätzwerte beschreiben, angepasst ist, um Symbolwahrscheinlichkeiten ($P1, P2, P_M$) für mögliche Datensymbole an Symbolpositionen auszurechnen, die zum Ableiten des verarbeiteten Kanalschätzwertes verwendet werden,
wobei die Symbolwahrscheinlichkeit eines bestimmten Datensymbols eine Wahrscheinlichkeit beschreibt, dass ein Sender das bestimmte Datensymbol aus einem Satz von möglichen Datensymbolen an einer bestimmten Symbolposition gesendet hat, basierend auf einem empfangenen Datensymbol an der bestimmten Symbolposition,
und wobei der Bestimmer ferner angepasst ist, um die Qualitätsmesswerte (EQI; $SNR_{eff}$) der Datenschätzwerte von den Symbolwahrscheinlichkeiten abzuleiten.

**9.** Der Kanalschätzer (300) gemäß Anspruch 8, bei dem der Bestimmer (310) angepasst ist, um den Qualitätsmesswert (EQI) an einer gegebenen Symbolposition durch ein Bestimmen einer Symbolwahrscheinlichkeit eines wahrscheinlichsten Datensymbols an der gegebenen Symbolposition und einer Symbolswahrscheinlichkeit eines zweitwahrscheinlichsten Datensymbols an der gegebenen Symbolposition und durch ein Bestimmen des Qualitätsmesswertes als einen Quotienten der Symbolwahrscheinlichkeit (P2) des zweitwahrscheinlichsten Datensymbols und der Symbolwahrscheinlichkeit (P1) des wahrscheinlichsten Datensymbols abzuleiten.

**10.** Der Kanalschätzer (300) gemäß einem der Ansprüche 1 bis 9, bei dem der Bestimmer (310) angepasst ist, um effektive Signal-Rauschen-Verhältnisse ($SNR_{eff}$) oder Rauschen-Signal-Verhältnisse für die zumindest zwei unterschiedlichen Symbolpositionen als die Qualitätsmesswerte zu erhalten.

**11.** Der Kanalschätzer (300) gemäß Anspruch 10, bei dem der Bestimmer (310) angepasst ist, um das effektive Signal-Rausch-Verhältnis oder das Rausch-Signal-Verhältnis an einer bestimmten Symbolposition zu erhalten, durch ein Bilden eines Quotienten eines Energiemesswerts ($|\hat{X}|^2$) eines geschätzten Datensymbols ($\hat{X}$) an der bestimmten Symbolposition und eines Rauschwertes ($\sigma_{\hat{N}'}^2$), der ein effektives Rauschen beschreibt, unter Berücksichtigung der Varianz der Datensymbole für die Bestimmung des geschätzten Datensymbols an der bestimmten Symbolposition.

12. Der Kanalschätzer (300) gemäß einem der Ansprüche 1 bis 11, bei dem der Gewichter (330) angepasst ist, um die Qualitätsmesswerte (EQI; $SNR_{eff}$) mit absoluten Größen ($|c'|$) der Filterkoeffizienten zu gewichten, um die gewichteten Qualitätsmesswerte (CEQI) zu erhalten.

13. Der Kanalschätzer (300) gemäß Anspruch 12, bei dem der Gewichter (330) ferner angepasst ist, um die Qualitätsmesswerte (EQI) durch ein Bilden eines Quotienten zwischen einer Summe von Qualitätsmesswerten (EQI), gewichtet mit absoluten Werten ($|c'|$) der Filterkoeffizienten (c') , und einer Summe der absoluten Werte der Filterkoeffizienten zu gewichten.

14. Der Kanalschätzer (300) gemäß einem der Ansprüche 1 bis 12, bei dem der Gewichter (330) angepasst ist, um die Qualitätsmesswerte (EQI; $SNR_{eff}$) mit Quadraten ($|c'|^2$) von absoluten Größen der Filterkoeffizienten zu gewichten.

15. Der Kanalschätzer (300) gemäß einem der Ansprüche 1 bis 14, bei dem der Schwellenwert ($\alpha$) ein vorbestimmter fester Wert ist.

16. Der Kanalschätzer (300) gemäß einem der Ansprüche 1 bis 14, wobei der Kanalschätzer einen Schwellenwertbestimmer aufweist, der angepasst ist, um den Schwellenwert ($\alpha$) auf der Basis eines Schätzwerts eines mittleren quadratischen Fehlers eines Kanalschätzwertes zu bestimmen, der durch eine lediglich pilotbasierte Kanalschätzung erhalten wird.

17. Der Kanalschätzer (300) gemäß Anspruch 16, bei dem der Schwellenwertbestimmer angepasst ist, um in den Schwellenwert ($\alpha$) einen Term einzuführen, der einen erwarteten Interpolationsfehler des Filters (360) in Abhängigkeit von den Filterkoeffizienten beschreibt.

18. Der Kanalschätzer (300) gemäß einem der Ansprüche 1 bis 17, bei dem die Symbolpositionen (k, n; w) unterschiedliche Teilträger eines OFDM-Modulationsschemas sind.

19. Der Kanalschätzer (300) gemäß einem der Ansprüche 1 bis 17, bei dem die Symbolpositionen (k, n; w) nachfolgende Zeitintervalle eines OFDM-Modulationsschemas sind.

20. Der Kanalschätzer (300) gemäß einem der Ansprüche 1 bis 19, bei dem der Bestimmer (310) angepasst ist, um die Qualitätsmesswerte (EQI; $SNR_{eff}$) auf einen Wert zu setzen, der eine optimale Zuverlässigkeit an Symbolpositionen anzeigt, wo ein Pilotsymbol gesendet wird.

21. Der Kanalschätzer (300) gemäß einem der Ansprüche 1 bis 20, wobei der Kanalschätzer derart angepasst ist, dass die Qualitätsmesswerte (EQI; $SNR_{eff}$) bezüglich der Symbolposition existierenden Kanalschätzwerten ($\tilde{H}_{k,n}$) entsprechen und
wobei der Gewichter (330) angepasst ist, um einen bestimmten Qualitätsmesswert in Abhängigkeit von dem gleichen Filterkoeffizienten (c') zu gewichten, der bei der Filterung auf den existierenden Kanalschätzwert angewendet wird, der den bestimmten Qualitätsmesswerten entspricht.

22. Der Kanalschätzer (300) gemäß einem der Ansprüche 1 bis 21, bei dem der Bestimmer (310) und der Gewichter (330) derart angepasst sind, dass der gewichtete Qualitätsmesswert (CEQI) eine Zuverlässigkeit des verarbeiteten Kanalschätzwertes beschreibt, der von den existierenden Kanalschätzwerten abgeleitet wird, wobei die existierenden Kanalschätzwerte auf den Datenschätzwerten basieren.

23. Der Kanalschätzer (300) gemäß einem der Ansprüche 1 bis 22, wobei der Bestimmer (310) angepasst ist, um die Qualitätsmesswerte (EQI; $SNR_{eff}$) zu bestimmen, derart, dass die Qualitätsmesswerte die Zuverlässigkeit von Datenschätzwerten ($\hat{X}$) beschreiben, die verwendet werden, um die existierenden Kanalschätzwerte (H) zu liefern.

24. Der Kanalschätzer (300) gemäß einem der Ansprüche 1 bis 23, wobei der Kanalschätzer angepasst ist, um iterativ den verarbeiteten Kanalschätzwert zu verbessern und die existierenden Kanalschätzwerte für eine bestimmte Iteration auf der Basis von Datenschätzwerten ($\hat{X}$), die unter Verwendung eines Kanalschätzwerts bestimmt werden, der in einer vorhergehenden Iteration berechnet wird, und Modulationssymbolen (Y) von Datensymbolen, die in den zumindest zwei Symbolpositionen (k, n; w) berechnet werden, auszurechnen.

**25.** Der Kanalschätzer (300) gemäß einem der Ansprüche 1 bis 24, wobei der Kanalschätzer angepasst ist, um die existierende Kanalschätzwerte ($\tilde{H}$) als Quotienten zwischen empfangenen Modulationssymbolen (Y) von Datensymbolen, die in den zumindest zwei Symbolpositionen (k, n; w) gesendet werden, und den Datenschätzwerten, die unter Verwendung eines vorhergehend berechneten Kanalschätzwerts bestimmt werden, auszurechnen.

**26.** Der Kanalschätzer (300) gemäß einem der Ansprüche 1 bis 25, bei dem die Datenschätzwerte ($\hat{X}$) Weichentscheidungsschätzwerte oder harte Symbole sind, gebildet durch eine Summierung von möglichen Datensymbolen (Am), gewichtet mit entsprechenden Wahrscheinlichkeiten (P(X = A$_m$)), die die Wahrscheinlichkeit beschreiben, dass das entsprechende Datensymbol (Am) gesendet wurde.

**27.** Ein Verfahren (300) zum Erhalten eines verarbeiteten Kanalschätzwerts ( $\hat{H}_w^{(n_i+1)}$ ) für eine Symbolposition (k, n; w) in Zeit oder Frequenz unter Verwendung von existierenden Kanalschätzwerten (Y/$\hat{X}$) für eine Mehrzahl von Symbolpositionen in Zeit oder Frequenz, wobei das Verfahren folgende Schritte aufweist:

Bestimmen von Qualitätsmesswerten (EQI; SNReff), die eine Zuverlässigkeit von Datenschätzwerten ($\hat{X}$) beschreiben und bezüglich einer Symbolposition den existierenden Kanalschätzwerten entsprechen, von Daten, die in zumindest zwei unterschiedlichen Symbolpositionen gesendet werden;
Gewichten der Qualitätsmesswerte in Abhängigkeit von Filterkoeffizienten (c') eines Symbolpositionsfilters (360), um einen gewichteten Qualitätsmesswert (CEQI) zu erhalten,
wobei die Koeffizienten des Symbolpositionsfilters angepasst sind, derart, dass gefilterte Kanalschätzwerte weniger durch Kanalverzerrungen beeinflusst werden als Kanalschätzwerte vor einer Filterung mit dem Symbolpositionsfilter;
Vergleichen des gewichteten Qualitätsmesswertes mit einem Schwellenwert ($\alpha$); und
lediglich wenn der gewichtete Qualitätsmesswert eine Zuverlässigkeit anzeigt, die eine Zuverlässigkeitsschwelle übersteigt, Erhalten des verarbeiteten Kanalschätzwerts durch ein Filtern von zumindest zwei Kanalschätzwerten aus dem existierenden Kanalschätzwert unter Verwendung der Filterkoeffizienten.

**28.** Ein Computerprogramm zum Ausführen des Verfahrens gemäß Anspruch 27, wenn das Computerprogramm auf einem Computer abläuft.

**Revendications**

**1.** Estimateur de canal (300) pour obtenir une estimation de canal traitée $\left( \hat{H}_w^{(n_i+1)} ; \hat{H}_{k,n}^{(n_i+1)} \right)$ pour une position de symbole (k,n; w) dans le temps ou en fréquence à l'aide d'estimations de canal existantes *(Y/$\hat{X}$)* pour une pluralité de positions de symbole dans le temps ou en fréquence, l'estimateur de canal comprenant:

un déterminateur (310) destiné à déterminer les mesures de qualité (EQI; SNR$_{eff}$) décrivant une fiabilité d'estimations de données *($\hat{X}$),* correspondant, en ce qui concerne la position de symbole, aux estimations de canal existantes, de données transmises en au moins deux positions de symbole différentes;
un pondérateur (330) destiné à pondérer les mesures de qualité en fonction de coefficients de filtre (c') d'un filtre de position de symbole (360), pour obtenir une mesure de qualité pondérée (CEQI),
dans lequel les coefficients du filtre de position de symbole sont adaptés de sorte que les estimations de canal filtrées soient moins affectées par les distorsions de canal que les estimations de canal avant filtration par le filtre de position de symbole;
un comparateur (340) destiné à comparer la mesure de qualité pondérée à une valeur de seuil ($\alpha$); et
un processeur (350) destiné à obtenir l'estimation de canal traitée par filtration, à l'aide des coefficients de filtre, au moins deux estimations de canal à partir des estimations de canal existantes, uniquement si la mesure de qualité pondérée indique une fiabilité excédant un seuil de fiabilité.

**2.** Estimateur de canal (300) selon la revendication 1, dans lequel le processeur (350) est adapté pour fournir une estimation de canal calculée précédemment $\left( \hat{H}_{k,n}^{n_i} \right)$ comme estimation de canal traitée $\left( \hat{H}_w^{(n_i+1)} ; \hat{H}_{k,n}^{(n_i+1)} \right),$ si la mesure de qualité pondérée (CEQI) indique une fiabilité inférieure au seuil de fiabilité.

**3.** Estimateur de canal (300) selon la revendication 1 ou la revendication 2, dans lequel le filtre (360) comprend une fenêtre de filtre,

dans lequel le filtre est adapté de manière à combiner les estimations de canal à partir des positions de symbole (k,n) dans la fenêtre de filtre pour générer l'estimation de canal traitée $\left(\hat{H}_{w}^{(n_i+1)};\hat{H}_{k,n}^{(n_i+1)}\right)$; et

dans lequel les coefficients de filtre (c') décrivent la contribution d'estimations de canal existantes individuelles dans la fenêtre de filtre à l'estimation de canal traitée.

4. Estimateur de canal (300) selon la revendication 3, dans lequel l'estimateur de canal est adapté pour calculer les estimations de canal traitées $\left(\hat{H}_{w}^{(n_i+1)};\hat{H}_{k,n}^{(n_i+1)}\right)$ comme somme pondérée d'estimations de canal existantes dans la fenêtre de filtre, le poids des estimations de canal existantes individuelles étant déterminé par le coefficient de filtre (c').

5. Estimateur de canal (300) selon la revendication 3 ou 4, dans lequel au moins deux coefficients de filtre (c') sont différents de 0, de sorte qu'au moins deux estimations de canal existantes soient combinées pour obtenir l'estimation de canal traitée $\left(\hat{H}_{w}^{(n_i+1)};\hat{H}_{k,n}^{(n_i+1)}\right)$.

6. Estimateur de canal (300) selon l'une des revendications 1 à 5, dans lequel le filtre de position de symbole (360) est un filtre de Wiener, et dans lequel l'estimateur de canal comprend un déterminateur de coefficients de filtre destiné à dériver les coefficients de filtre (c') du filtre de position de symbole (360) à partir d'une valeur de bruit $\left(\sigma_{N}^{2}\right)$ et d'une matrice d'autocorrélation ($R_{HH}$) d'une fonction de transfert du canal, de sorte que le filtre de Wiener réduise un impact de bruit des estimations de canal existantes sur l'estimation de canal traitée $\left(\hat{H}_{w}^{(n_i+1)};\hat{H}_{k,n}^{(n_i+1)}\right)$.

7. Estimateur de canal (300) selon la revendication 6, dans lequel le filtre de position de symbole (360) est un filtre de réponse impulsionnelle finie linéaire destiné à déterminer l'estimation de canal traitée ($\hat{H}_{k,n}$) en effectuant une opération de produit vecteur-scalaire de la forme

$$\hat{H}_{k,n} = c'^{T} \cdot \widetilde{h}_{n},$$

où $c'^{T}$ est un vecteur de coefficients de filtre transposé comprenant au moins deux coefficients de filtre (c'), et où $\widetilde{h}_{n}$ est un vecteur comprenant au moins deux estimations de canal existantes ($\widetilde{H}_{k,n_1}\ \widetilde{H}_{k,n_2}$); et

où le déterminateur de coefficients de filtre est adapté pour déterminer le vecteur de coefficients de filtre (c') selon

$$c' = \left(R_{HH} + \left(\frac{\sigma_{N}^{2}}{E_{S}}\right) \cdot I\right)^{-1} \cdot I_{HH},$$

où $R_{HH}$ est une matrice d'autocorrélation d'une fonction de transfert de canal,

où $\left(\sigma_{N}^{2}\right)$ est une valeur de bruit décrivant un bruit du canal,

où $E_{s}$ est une énergie de symbole des symboles de données transmis,

où I est une matrice d'identité, et

où $r_{HH}$ est un vecteur de corrélation croisée exprimant une corrélation entre une fonction de transfert de canal dérivée et les fonctions de transfert de canal de toute la fenêtre de filtre.

**8.** Estimateur de canal (300) selon l'une des revendications 1 à 7,
dans lequel le déterminateur (310) destiné à déterminer les mesures de qualité (EQI; $SNR_{eff}$) décrivant la fiabilité des estimations de données est adapté pour calculer les probabilités de symbole (P1, P2, $P_M$) pour de possibles symboles de données aux positions de symbole utilisées pour dériver l'estimation de canal traitée,
la probabilité de symbole d'un certain symbole de données décrivant une probabilité qu'un émetteur a transmis le certain symbole de données parmi un ensemble de possibles symboles de données à une certaine position de symbole, sur base d'un symbole de données reçu à la certaine position de symbole,
et dans lequel le déterminateur est, par ailleurs, adapté pour dériver les mesures de qualité (EQI; $SNR_{eff}$) des estimations de données à partir des probabilités de symbole.

**9.** Estimateur de canal (300) selon la revendication 8, dans lequel le déterminateur (310) est adapté pour dériver la mesure de qualité (EQI) en une position de symbole donnée en déterminant une probabilité de symbole d'un symbole de données le plus probable à la position de symbole donnée et une probabilité de symbole d'un symbole de données le deuxième plus probable à la position de symbole donnée, et en déterminant la mesure de qualité comme quotient de la probabilité de symbole (P2) du symbole de données le deuxième plus probable et la probabilité de symbole (P1) du symbole de données le plus probable.

**10.** Estimateur de canal (300) selon l'une des revendications 1 à 9, dans lequel le déterminateur (310) est adapté pour obtenir des rapports signal-bruit effectifs ($SNR_{eff}$) ou des rapports signal-bruit pour les au moins deux positions de symbole différentes comme mesures de qualité.

**11.** Estimateur de canal (300) selon la revendication 10, dans lequel le déterminateur (310) est adapté pour obtenir le rapport signal-bruit effectif ou le rapport signal-bruit en une certaine position de symbole en formant un quotient d'une mesure d'énergie ($|\hat{X}|^2$) d'un symbole de données estimé ($\hat{X}$) à la certaine position de symbole et d'une valeur de bruit $\sigma \dfrac{2}{N}$ décrivant un bruit effectif en tenant compte de la variance des symboles de données pour la détermination du symbole de données estimé à la certaine position de symbole.

**12.** Estimateur de canal (300) selon l'une des revendications 1 à 11, dans lequel le pondérateur (330) est adapté pour pondérer les mesures de qualité (EQI; $SNR_{eff}$ avec les amplitudes absolues ($|c'|$) des coefficients de filtre, pour obtenir les mesures de qualité pondérées (CEQI).

**13.** Estimateur de canal (300) selon la revendication 12, dans lequel le pondérateur (330) est, par ailleurs, adapté pour pondérer les mesures de qualité (EQI) en formant un quotient entre une somme de mesures de qualité (EQI) pondérées avec les valeurs absolues ($|c'|$) des coefficients de filtre (c') et une somme des valeurs absolues des coefficients de filtre.

**14.** Estimateur de canal (300) selon l'une des revendications 1 à 12, dans lequel le pondérateur (330) est adapté pour pondérer les mesures de qualité (EQI; $SNR_{eff}$) avec les carrés ($|c'|^2$) es amplitudes absolues des coefficients de filtre.

**15.** Estimateur de canal (300) selon l'une des revendications 1 à 14, dans lequel la valeur de seuil ($\alpha$) est une valeur fixe prédéterminée.

**16.** Estimateur de canal (300) selon l'une des revendications 1 à 14, dans lequel l'estimateur de canal comprend un déterminateur de valeur de seuil adapté pour déterminer la valeur de seuil ($\alpha$) sur base d'une estimation d'une erreur au carré moyenne d'une estimation de canal obtenue par une estimation de canal à base uniquement de pilote.

**17.** Estimateur de canal (300) selon la revendication 16, dans lequel le déterminateur de valeur de seuil est adapté pour introduire dans la valeur de seuil ($\alpha$) un terme décrivant une erreur d'interpolation prévue du filtre (360) en fonction des coefficients de filtre.

**18.** Estimateur de canal (300) selon l'une des revendications 1 à 17, dans lequel les positions de symbole (k,n; w) sont des sous-porteuses différentes d'un schéma de modulation OFDM.

**19.** Estimateur de canal (300) selon l'une des revendications 1 à 17, dans lequel les positions de symbole (k,n; w) sont des intervalles de temps successifs d'un schéma de modulation OFDM.

**20.** Estimateur de canal (300) selon l'une des revendications 1 à 19, dans lequel le déterminateur (310) est adapté pour régler les mesures de qualité (EQI; $SNR_{eff}$) à une valeur indiquant une fiabilité optimale à des positions de symbole où est transmis un symbole pilote.

**21.** Estimateur de canal (300) selon l'une des revendications 1 à 20, dans lequel l'estimateur de canal est adapté de sorte que les mesures de qualité (EQI; $SNR_{eff}$) correspondent, en ce qui concerne la position de symbole, à des estimations de canal existantes ($\tilde{H}_{k,n}$) , et
dans lequel le pondérateur (330) est adapté pour pondérer une certaine mesure de qualité en fonction du même coefficient de filtre (c') qui est appliqué, lors de la filtration, à l'estimation de canal existante correspondant aux certaines mesures de qualité.

**22.** Estimateur de canal (300) selon l'une des revendications 1 à 21, dans lequel le déterminateur (310) et le pondérateur (330) sont adaptés de sorte que la mesure de qualité pondérée (CEQI) décrive une fiabilité de l'estimation de canal traitée dérivée des estimations de canal existantes, les estimations de canal existantes étant basées sur les estimations de données.

**23.** Estimateur de canal (300) selon l'une des revendications 1 à 22, dans lequel le déterminateur (310) est adapté pour déterminer les mesures de qualité (EQI; $SNR_{eff}$) de sorte que les mesures de qualité décrivent la fiabilité des estimations de données $(\hat{X})$ utilisées pour fournir les estimations de canal existantes ($\tilde{H}$).

**24.** Estimateur de canal (300) selon l'une des revendications 1 à 23, dans lequel l'estimateur de canal est adapté pour améliorer de manière itérative l'estimation de canal traitée, et pour calculer les estimations de canal existantes pour une certaine itération sur base des estimations de données ($\hat{X}$) déterminées à l'aide d'une estimation de canal calculée dans une itération précédente et des symboles de modulation (Y) des symboles de données transmis dans les au moins deux positions de symbole (k,n; w).

**25.** Estimateur de canal (300) selon l'une des revendications 1 à 24, dans lequel l'estimateur de canal est adapté pour calculer les estimations de canal existantes $(\tilde{H})$ comme quotients entre les symboles de modulation reçus (Y) des symboles de données transmis dans les au moins deux positions de symbole (k,n; w) et les estimations de données déterminées à l'aide d'une estimation de canal calculée précédemment.

**26.** Estimateur de canal (300) selon l'une des revendications 1 à 25, dans lequel les estimations de données $(\hat{X})$ sont des estimations de données à décision douce ou des symboles durs, formées par une addition de possibles symboles de données ($A_m$), pondérées avec les probabilités correspondantes ($P(X = A_m)$) décrivant la probabilité que le symbole de données respectif ($A_m$) a été transmis.

**27.** Procédé (300) pour obtenir une estimation de canal traitée $\left( \hat{H}_w^{(n_i+1)} \right)$ pour une position de symbole (k,n; w) dans le temps ou en fréquence à l'aide d'estimations de canal existantes $(Y/\hat{X})$ pour une pluralité de positions de symbole dans le temps ou en fréquence, le procédé comprenant les étapes consistant à:

déterminer les mesures de qualité (EQI; $SNR_{eff}$) décrivant une fiabilité d'estimations de données $(\hat{X})$ correspondant, en ce qui concerne la position de symbole, aux estimations de canal existantes des données transmises en au moins deux positions de symbole différentes;
pondérer les mesures de qualité en fonction des coefficients de filtre (c') d'un filtre de position de symbole (360), pour obtenir une mesure de qualité pondérée (CEQI),
dans lequel les coefficients du filtre de position de symbole sont adaptés de sorte que les estimations de canal filtrées soient moins affectées par les distorsions de canal que les estimations de canal avant filtration par le filtre de position de symbole;
comparer la mesure de qualité pondérée à une valeur de seuil ($\alpha$); et
uniquement si la mesure de qualité pondérée indique une fiabilité excédant un seuil de fiabilité, obtenir l'estimation de canal traitée par filtration, à l'aide des coefficients de filtre, au moins deux estimations de canal à partir de l'estimation de canal existante.

**28.** Programme d'ordinateur pour réaliser le procédé selon la revendication 27 lorsque le programme d'ordinateur est exécuté sur un ordinateur.

# FIG 1

frequency

time

| | Pilot |
|---|---|
| 110 | |
| | soft decison |
| 120 | |
| | desired channel estimeate |
| 130 | |

# FIG 2

# FIG 3

# FIG 4a

# FIG 4b

460

pilot- and non-pilot-based
channel estimates — 80

quality measures

| y | $y_1$ | $y_2$ | $y_3$ | $y_4$ | $y_5$ | $y_6$ | $y_7$ | $y_8$ | $y_9$ |
| x | $x_1$ | $x_2$ | $x_3$ | $x_4$ | $x_5$ | $x_6$ | $x_7$ | $x_8$ | $x_9$ |

| P | $rel_2$ | $rel_3$ | $rel_4$ | P | $rel_6$ | $rel_7$ | $rel_8$ | P |

— 461a

filter window (w)

filter window (w)

$c'(1)$ $c'(2)$ $c'(3)$ $c'(4)$ $c'(5)$ — 462

$$\sum_i f(c'(i)) \cdot g\,(rel(i'))$$

weighting

$c'(1)$ $c'(2)$ $c'(3)$ $c'(4)$ $c'(5)$

ltering

weighting quality
measure (CEQI) — 468

reliability exceeding
reliability threshold? — 470

— 461b

yes:

no — 490

$$\widehat{H}_w^{(n+1)} = \sum c'(i)\, y_i' / x_i'$$

filter pilot-and/or
non-pilot based
channel estimates

maintain previously
calculated
channel estimates

$$\widehat{H}_w^{(n+1)} := \widehat{H}_w^{(n)}$$

processed channel estimate
for filter window position
$\widehat{H}_w^{(n+1)}$

— 497

no

repeat for next filter window
position/ next symbol position

yes

more symbol positions w
to process?

no

channel estimate
sufficiently accurate?

yes

END

FIG 5

FIG 6.

FIG 7

FIG 8

FIG 9

FIG 10

## FIG 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. TEN BRINK ; F. SANZI ; J. SPEIDEL.** Two-Dimensional Iterative APP Channel Estimation and Decoding for OFDM Systems. *IEEE GLOBECOM,* 2000, vol. 2, 741-745
- **F. SANZI ; S. JELTING ; J. SPEIDEL.** A comparative study of iterative channel estimators for mobile OFDM systems. *IEEE Trans. on Wireless Communications,* September 2003, vol. 5 (2), 849-859
- **T. ZEMEN ; M. LONCAR ; J. WEHINGER ; C. MECKLENBRAÜKER ; R. MÜLLER.** Improved Channel Estimation for Iterative Receivers. *IEEE Global Telecommunications Conference (GLOBECOM),* December 2003, vol. 1, 257-261
- **T. ZEMEN ; J. WEHINGER ; C. MECKLENBRAÜKER ; R. MÜLLER.** Iterative detection and channel estimation for MC-CDMA. *IEEE International Conference on Communications (ICC),* May 2003, vol. 5, 3462-3466
- **J. BONNET ; G. AUER.** Optimized Iterative Channel Estimation for OFDM. *IEEE International Conference on Communications (ICC),* 2006

- **Y. XU ; H.-S. SU ; E. GERANIOTIS.** Pilot Symbol Assisted QAM with Iterative Filtering and Turbo Decoding over Rayleigh Flat-Fading Channels. *IEEE Military Communications Conference (MILCOM),* 1999, vol. 1, 86-91
- **H. NIU ; J. A. RITCEY.** Iterative channel estimation and decoding of pilot symbol assisted LDPC coded QAM over flat fading channels. *ASILOMAR Conference on Signals, Systems and Computers,* November 2003, vol. 2, 2265-2269
- **J. HAGENAUER ; E. OFFER ; L. PAPKE.** Iterative decoding of binary blocks and convolutional codes. *IEEE Trans. Inform. Theory,* March 1996, vol. 42, 429-445
- **G. AUER.** Modeling of OFDM Channel Estimation Errors. *International OFDM-Workshop,* September 2005
- D5.4 Final Report on Link Level and System Level Channel Models. *IST-2003-507581 WINNER,* September 2005